# EUROPEAN PATENT APPLICATION

(11) **EP 4 496 425 A1**
(43) Date of publication of application: **22.01.2025**
(21) Application number: 23187068.4
(22) Date of filing: 21.07.2023
(51) Int. Cl.: H04W 76/28, H04W 52/02

(54) **USER EQUIPMENT AND BASE STATION**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment comprising the following. Processing circuitry of the UE operates a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function. The processing circuitry monitors for reception of the first DCI message in one or more monitoring occasions during a first DCI monitoring window associated with a network active time period of the network-side DTX/DRX function. The processing circuitry monitors for reception of the first DCI message in one or more monitoring occasions during a second DCI monitoring window associated with said network active time period, said second DCI monitoring window being subsequent to the first DCI monitoring window.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates for a user equipment to perform improved cell DTX/DRX control procedures.

In an embodiment, the techniques disclosed here feature a user equipment comprising the following. Processing circuitry of the UE operates a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function. The processing circuitry monitors for reception of the first DCI message in one or more monitoring occasions during a first DCI monitoring window associated with a network active time period of the network-side DTX/DRX function. The processing circuitry monitors for reception of the first DCI message in one or more monitoring occasions during a second DCI monitoring window associated with said network active time period, said second DCI monitoring window being subsequent to the first DCI monitoring window.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates the relationship between Bandwidth Parts, Control Resource Sets (CORESETS), search spaces, search space sets, and PDCCH candidates,
- **Fig. 7**: illustrates the DRX operation of a mobile terminal, and in particular the DRX opportunity and on-duration periods, according to a short and long DRX cycle,
- **Fig. 8**: illustrates an exemplary implementation of the wake-up signal and its effect on the DRX operation and PDCCH monitoring operation at the UE,
- **Fig. 9**: illustrates an exemplary implementation of a network-side DTX/DRX mechanism, particularly a DCI-based activation/deactivation and a possible misalignment between UE and base station,
- **Fig. 10**: illustrates an exemplary implementation of a network-side DTX/DRX mechanism, particularly using same monitoring occasions for monitoring a DCI format 2_6 (for wake up signal) and a DCI format 2_X (i.e. for activation/deactivation of network-side DTX/DRX mechanism),
- **Fig. 11**: illustrates an exemplary and simplified structure of a UE and a gNB,
- **Fig. 12**: illustrates a structure of the UE according to an exemplary implementation of the first solution,
- **Fig. 13**: illustrates a flow diagram for the UE behavior according to an exemplary implementation of the first solution,
- **Fig. 14**: illustrates a structure of the base station according to an exemplary implementation of the first solution,
- **Fig. 15**: illustrates a flow diagram for the base station behavior according to an exemplary implementation of the first solution,
- **Fig. 16**: is a signaling diagram illustrating an exemplary exchange between the UE and the gNB for an exemplary implementation of the first solution,
- **Fig. 17**: illustrates the configuration of the two DCI monitoring windows according to Variant 1 of the first solution,
- **Fig. 18**: illustrates an exemplary operation of the UE and gNB for the improved cell DTX/DRX control procedure according to Variant 1 of the first solution,
- **Fig. 19**: illustrates the configuration of the two DCI monitoring windows according to Variant 2 of the first solution,
- **Fig. 20**: illustrates an exemplary operation of the UE and gNB for the improved cell DTX/DRX control procedure according to Variant 2 of the first solution,
- **Fig. 21**: illustrates the configuration of the two DCI monitoring windows according to Variant 3 of the first solution,
- **Fig. 22**: illustrates an exemplary operation of the UE and gNB for the improved cell DTX/DRX control procedure according to Variant 3 of the first solution,
- **Fig. 23**: illustrates a structure of the UE according to an exemplary implementation of the second solution, and
- **Fig. 24**: illustrates a flow diagram for the UE behavior according to an exemplary implementation of the second solution.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

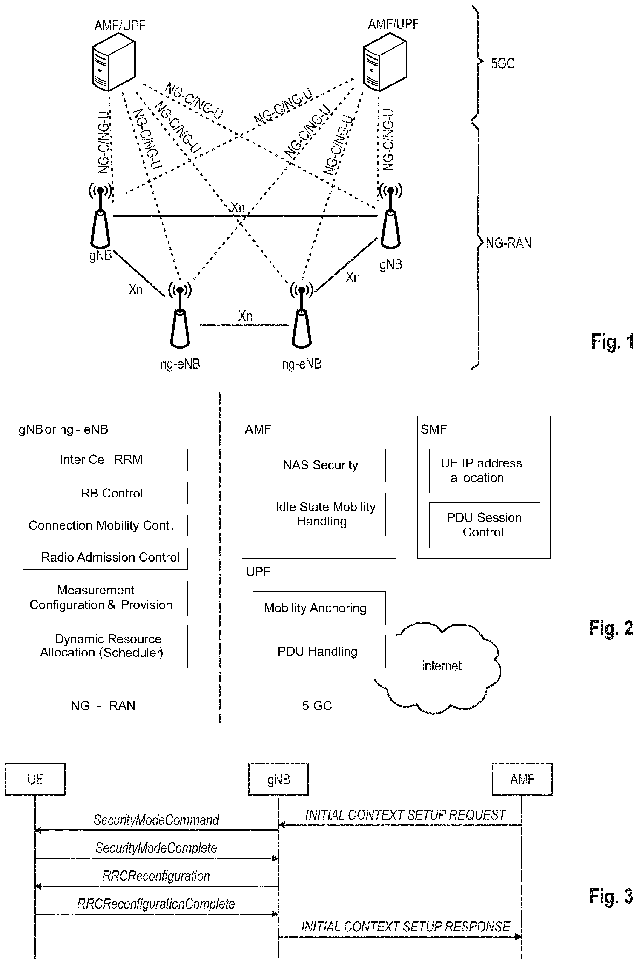

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.5.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.5.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

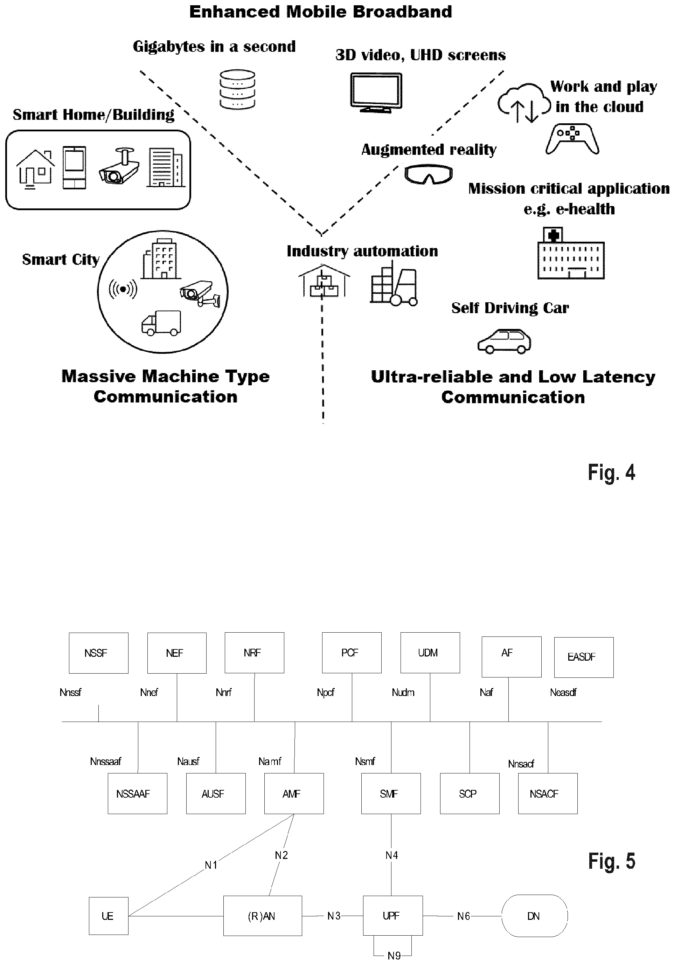

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v15.9.0, section 4.2.3, see also v17.5.0 or v18.2.2). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.5.0 section 7.3.1). An overview is given by the following table.

| **DCI format** | **Usage** |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of one or multiple PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of the PRB(s) and OFDM symbol(s) where UE cancels the corresponding UL transmission from the UE |
| 2_5 | Notifying the availability of soft resources as defined in Clause 9.3.1 of [10, TS 38.473] |
| 2_6 | Notifying the power saving information outside DRX Active Time for one or more UEs |
| 2_7 | Notifying paging early indication and TRS availability indication for one or more UEs. |
| 3_0 | Scheduling of NR sidelink in one cell |
| 3 1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/G-CS-RNTI for multicast |
| 4_2 | Schedulng of PDSCH with CRC scrambled by G-RNTI/G-CS-RNTI for multicast |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.6.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

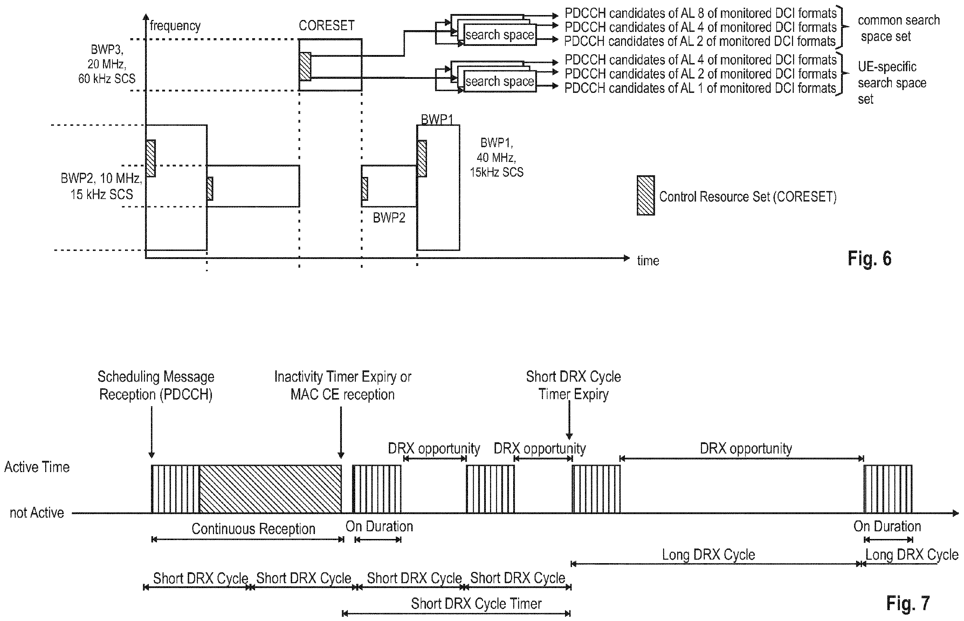

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Discontinued Reception, DRX, in LTE and 5G NR

To reduce the battery consumption in the UE, a mechanism to minimize the time the UE spends monitoring the PDCCH is used, which is called the Discontinuous Reception (DRX) functionality. UE side DRX is defined in 3GPP, e.g. in 3GPP Technical Standard TS 36.321, 17.5.0, chapter 5.7, as well as in 3GPP TS 38.331 v17.5.0 (see e.g. *DRX-Config* Information Element in section 6.3.2).

An exemplary implementation of the discontinued reception (DRX) function in 5G NR that involves PDCCH monitoring, according to one exemplary standardized version, will be explained in a simplified and abbreviated form in the following.

DRX functionality can be configured for RRC_IDLE, in which case the UE uses either the specific or default DRX value (defaultPagingCycle); the default paging cycle is broadcasted in the System Information and e.g. can have values of 32, 64, 128 and 256 radio frames. The UE needs to wake up for one paging occasion per DRX cycle, the paging occasion being one subframe. DRX functionality can be also configured for an "RRC_CONNECTED" UE, so that it does not always need to monitor the downlink control channels for downlink control information (or phrased simply: the UE monitors the PDCCH).

The following DRX-related parameters are defined based on the *IE DRX-Config:*

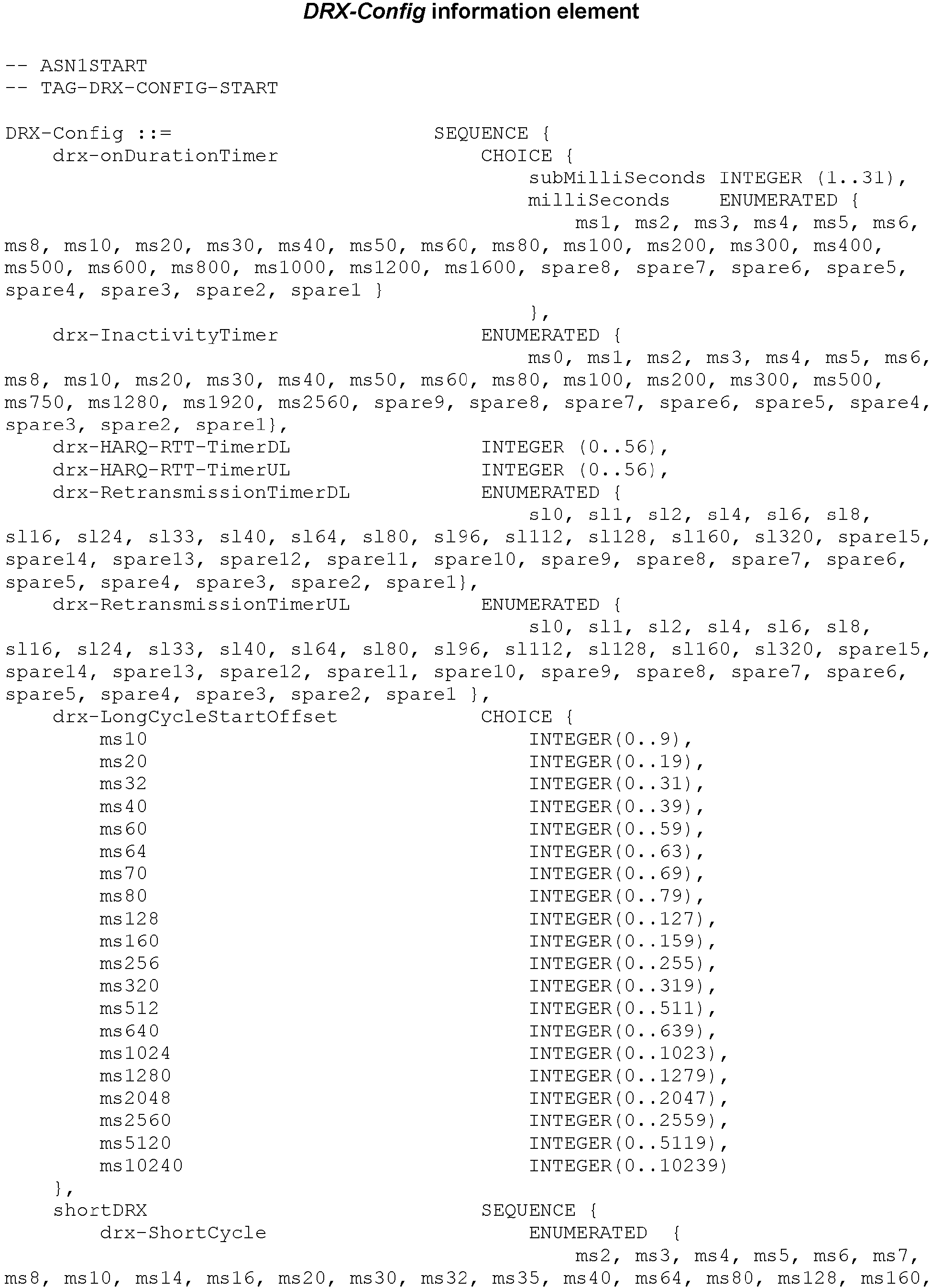

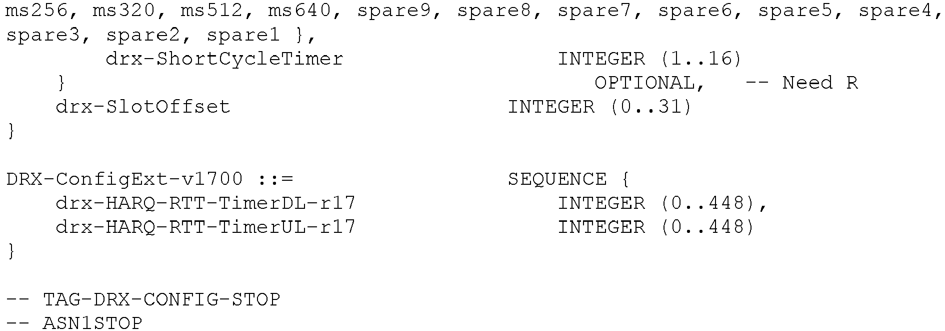

| ***DRX-Config* field descriptions** |
|---|
| ***drx-HARQ-RTT-TimerDL*** |
| Value in number of symbols of the BWP where the transport block was received *drx-HARQ-RTT-TimerDL-r17* is only applicable for SCS 480 kHz and 960 kHz. If configured, the UE shall ignore *drx-HARQ-RTT-TimerDL* (without suffix) for SCS 480 kHz and 960 kHz. |
| ***drx-HARQ-RTT-TimerUL*** |
| Value in number of symbols of the BWP where the transport block was transmitted *drx-HARQ-RTT-TimerUL-r17* is only applicable for SCS 480 kHz and 960 kHz. If configured, the UE shall ignore *drx-HARQ-RTT-TimerUL* (without suffix) for SCS 480 kHz and 960 kHz. |
| ***drx-InactivityTimer*** |
| Value in multiple integers of 1 ms. *ms0* corresponds to 0, *ms1* corresponds to 1 ms, *ms2* corresponds to 2 ms, and so on. |
| ***drx-LongCycleStartOffset*** |
| *drx-LongCycle* in ms and *drx-StartOffset* in multiples of 1 ms. If *drx-ShortCycle* is configured, the value of *drx-LongCycle* shall be a multiple of the *drx-ShortCycle* value. |
| ***drx-onDuration Timer*** |
| Value in multiples of 1/32 ms (subMilliSeconds) or in ms (milliSecond). For the latter, value *ms1* corresponds to 1 ms, value *ms2* corresponds to 2 ms, and so on. |
| ***drx-Retransmission TimerDL*** |
| Value in number of slot lengths of the BWP where the transport block was received value *s*/*0* corresponds to 0 slots, *sl1* corresponds to 1 slot, *s*/*2* corresponds to 2 slots, and so on. |
| ***drx-Retransmission TimerUL*** |
| Value in number of slot lengths of the BWP where the transport block was transmitted *s*/*0* corresponds to 0 slots, *sl1* corresponds to 1 slot, *s*/*2* corresponds to 2 slots, and so on. |
| ***drx-ShortCycleTimer*** |
| Value in multiples of *drx-ShortCycle.* A value of 1 corresponds to *drx-ShortCycle,* a value of 2 corresponds to 2 * *drx-ShortCycle* and so on. |
| ***drx-ShortCycle*** |
| Value in ms. *ms1* corresponds to 1 ms, *ms2* corresponds to 2 ms, and so on. |
| ***drx-SlotOffset*** |
| Value in 1/32 ms. Value 0 corresponds to 0 ms, value 1 corresponds to 1/32 ms, value 2 corresponds to 2/32 ms, and so on. |

The definition of Active Time in the 5G NR standard is given in TS 38.321, version 17.5.0 section 5.7:
When DRX is configured, the Active Time for Serving Cells in a DRX group includes the time while:
- *drx-onDurationTimer* or *drx-InactivityTimer* configured for the DRX group is running; or
- *drx-RetransmissionTimerDL, drx-RetransmissionTimerUL* or *drx-RetransmissionTimerSL* is running on any Serving Cell in the DRX group; or
- *ra-ContentionResolutionTimer* (as described in clause 5.1.5) or *msg8-ResponseWindow* (as described in clause 5.1.4a) is running; or
- a Scheduling Request is sent on PUCCH and is pending (as described in clause 5.4.4 or 5.22.1.5). If this Serving Cell is part of a non-terrestrial network, the Active Time is started after the Scheduling Request transmission that is performed when the *SR_COUNTER* is 0 for all the SR configurations with pending SR(s) plus the UE-gNB RTT; or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

For instance, the total duration that the UE is awake is called "Active time" or DRX Active Time. The Active Time e.g. includes the on-duration of the DRX cycle (see e.g. above *drx-onDurationTimer*), the time UE is performing continuous reception while the inactivity timer has not expired (see e.g. above *drx-InactivityTimer*) and the time UE is performing continuous reception while waiting for a downlink retransmission after one HARQ RTT (see e.g. above *drx-RetransmissionTimerDL, drx-RetransmissionTimerUL* , *drx-RetransmissionTimerSL*). Similarly, for the uplink the UE is awake (i.e. in DRXActive Time) at subframes where uplink retransmission grants can be received over the PDCCH, i.e. every 8ms after an initial uplink transmission until the maximum number of retransmissions is reached. Based on the above, the minimum Active Time is of fixed length equal to on-duration, and the maximum is variable (depending on e.g. the PDCCH activity).

The "DRX period" or "DRX off period" is the time duration during which a UE can skip reception of downlink channels for battery saving purposes, i.e. is not required to monitor the downlink channels. The operation of DRX gives the mobile terminal the opportunity to deactivate the radio circuits repeatedly (according to the currently active DRX cycle) in order to save power. Whether the UE indeed remains in DRX (i.e. is not active) during the DRX period may be decided by the UE; for example, the UE usually performs inter-frequency measurements which cannot be conducted during the On-Duration, and thus need to be performed at some other time, e.g. during the DRX off time.

To meet conflicting requirements, two DRX cycles - a short cycle and a long cycle - can be configured for each UE; the short DRX cycle is optional, i.e. only the long DRX cycle could be used. The transition between the short DRX cycle, the long DRX cycle and continuous reception is controlled either by a timer or by explicit commands from the eNodeB. In some sense, the short DRX cycle can be considered as a confirmation period in case a late packet arrives, before the UE enters the long DRX cycle. If data arrives at the eNodeB while the UE is in the short DRX cycle, the data is scheduled for transmission at the next on-duration time, and the UE then resumes continuous reception. On the other hand, if no data arrives at the eNodeB during the short DRX cycle, the UE enters the long DRX cycle, assuming that the packet activity is finished for the time being.

During the Active Time, the UE monitors e.g. the PDCCH, reports SRS (Sounding Reference Signal) as configured and reports CQI (Channel Quality Information)/PMI (Precoding Matrix Indicator)/RI (Rank Indicator)/PTI (Precoder Type Indication) on PUCCH.

When UE is not in Active time, type-0-triggered SRS and CQI/PMI/RI/PTI on PUCCH may not be reported. If CQI masking is set up for the UE, the reporting of CQI/PMI/RI/PTI on PUCCH is limited to the On-Duration subframes.

**Fig. 7** illustrates an example of a simplified DRX operation. The UE checks for scheduling messages (can also be termed downlink/uplink assignment; e.g. indicated by its C-RNTI, cell radio network temporary identity, on the PDCCH) during the "on-duration" period, which is the same for the long DRX cycle and the short DRX cycle. When a scheduling message is received during an "on-duration period", the UE starts an "inactivity timer" and keeps monitoring the PDCCH in every subframe while the Inactivity Timer is running. During this period, the UE can be regarded as being in a "continuous reception mode". Whenever a scheduling message is received while the Inactivity Timer is running, the UE restarts the Inactivity Timer, and when it expires the UE moves into a short DRX cycle and starts a "short DRX cycle timer" (assuming a short DRX cycle is configured). When the short DRX cycle timer expires, the UE moves into a long DRX cycle. The short DRX cycle may also be initiated by means of a DRX MAC Control Element, which the eNB can send at any time to put the UE immediately into a DRX cycle, i.e. the short DRX cycle (if so configured) or long DRX cycle (in case the short DRX cycle is not configured).

It should be noted that the term PDCCH may for instance refer to the PDCCH with common search space, or the PDCCH with the UE-specific search space, or even the GC-PDCCH (Group Common PDCCH) in the 5G NR.

To summarize the above within the context of the improved concepts and aspects for the PDCCH monitoring as will be explained later, the UE monitors the PDCCH using timers to respectively control the On-Duration time as well as the DRX-inactivity time. While the corresponding timers are running, the UE is required to continue monitoring the PDCCH for the DRX operation.

### Power-Saving enhancements - Wake-Up signal

The Wake-Up signal is a type of power saving mechanism introduced in 5G NR Rel. 16 to improve the DRX operation. One exemplary implementation of the Wake-Up DRX mechanism is specified in 3GPP TS 38.213 v17.6.0 section 10.3.

It tries to save power by letting the UE continue to sleep (i.e. No wake up), even for DRX OnDuration periods, especially when there is no data for the UE. To said end, the gNB notifies the UE to not wake up by use of the Wake-up signal. On the other hand, when there is data for the UE, the gNB could notify the UE to wake up so that the UE wakes up and receives data during the OnDuration time.

According to the exemplary implementation of 3GPP TS 38.212, DCI format 2_6 is used in connection with the Wake up signal, for notifying power saving information outside of the DRX Active Time for one or more UEs. The CRC (cyclic redundancy *check*) code of this DCI is scrambled by the PS-RNTI (Power-Saving Radio Network Temporary Identifier). The following information is transmitted by means of DCI Format 2_6:
- block number 1, block number 2,..., block number *N*
   where the starting position of a block is determined by the parameter *ps-PositionDC*/*-2-6* provided by higher layers for the UE configured with the block.

If the UE is configured with higher layer parameter *ps-RNTI* and *dci-Format2-6,* one block is configured for the UE by higher layers, with the following fields defined for the block:
- Wake-up indication - 1 bit
- SCell dormancy indication - 0 bit if higher layer parameter *dormancyGroupOutsideActiveTime* is not configured; otherwise 1, 2, 3, 4 or 5 bits bitmap determined according to the number of different *DormancyGroupID(s)* provided by higher layer parameter *dormancyGroupOutsideActiveTime,* where each bit corresponds to one of the SCell group(s) configured by higher layers parameter *dormancyGroupOutsideActiveTime,* with MSB to LSB of the bitmap corresponding to the first to last configured SCell group in ascending order of *DormancyGroupID.*

The size of DCI format 2_6 is indicated by the higher layer parameter *sizeDCI-2-6,* according to Clause 10.3 of 3GPP TS 38.213.

The UE can be configured to apply the wake up signal, e.g. based on the DCP-Config-r16 (as part of the PhysicalCellGroupConfig information element used to configured cell-group specific L1 parameter).

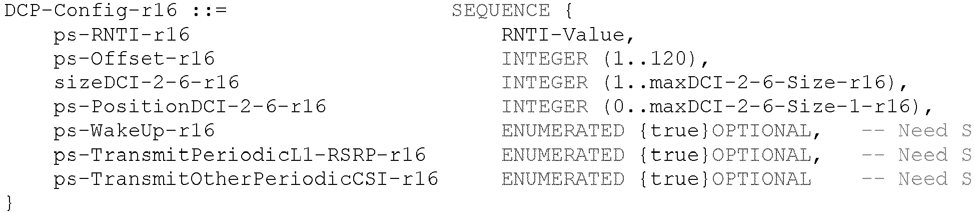

| |
|---|
| ***ps-RNTI*** |
| RNTI value for scrambling CRC of DCI format 2-6 used for power saving (see TS 38.213 [13], clause 10.1). |
| ***ps-Offset*** |
| The start of the search-time of DCI format 2-6 with CRC scrambled by PS-RNTI relative to the start of the *drx-onDurationTimer* of Long DRX (see TS 38.213 [13], clause 10.3). Value in multiples of 0.125ms (milliseconds). 1 corresponds to 0.125 ms, 2 corresponds to 0.25 ms, 3 corresponds to 0.375 ms and so on. |
| ***ps-WakeUp*** |
| Indicates the UE to wake-up if DCI format 2-6 is not detected outside active time (see TS 38.321 [3], clause 5.7). If the field is absent, the UE does not wake-up if DCI format 2-6 is not detected outside active time. |
| ***ps-PositionDCI-2-6*** |
| Starting position of UE wakeup and SCell dormancy indication in DCI format 2-6 (see TS 38.213 [13], clause 10.3). |
| ***ps- TransmitPeriodicL 1-RSRP*** |
| Indicates the UE to transmit periodic L1-RSRP report(s) when the *drx-onDurationTimer* does not start (see TS 38.321 [3], clause 5.7). If the field is absent, the UE does not transmit periodic L1-RSRP report(s) when the *drx-onDurationTimer* does not start. |
| ***ps- TransmitOtherPeriodicCSI*** |
| Indicates the UE to transmit periodic CSI report(s) other than L1-RSRP reports when the *drx-onDurationTimer* does not start (see TS 38.321 [3], clause 5.7). If the field is absent, the UE does not transmit periodic CSI report(s) other than L1-RSRP reports when the *drx-onDurationTimer* does not start. |

As e.g. defined in section 10.3 of 3GPP TS 38.213, *ps-Offset indicates* a time, where the UE starts monitoring the PDCCH for detection of DCI format 2_6 according to the number of search space sets, prior to a slot where the drx-onDurationTimer would start on the PCell or on the SpCell. For each search space set, the PDCCH monitoring occasions are the ones in the first Ts slots indicated by the parameter duration (or Ts = 1 if duration is not provided), starting from the first slot of the first Ts slots and ending prior to the start of the drx-onDurationTimer.

On PDCCH monitoring occasions associated with a same long DRX Cycle, a UE does not expect to detect more than on DCI format 2_6 with different values of the Wake-up indication bit for the UE or with different values of the bitmap for the UE.

The UE does not monitor the PDCCH for detecting DCI format 2_6 during the DRX Active Time.

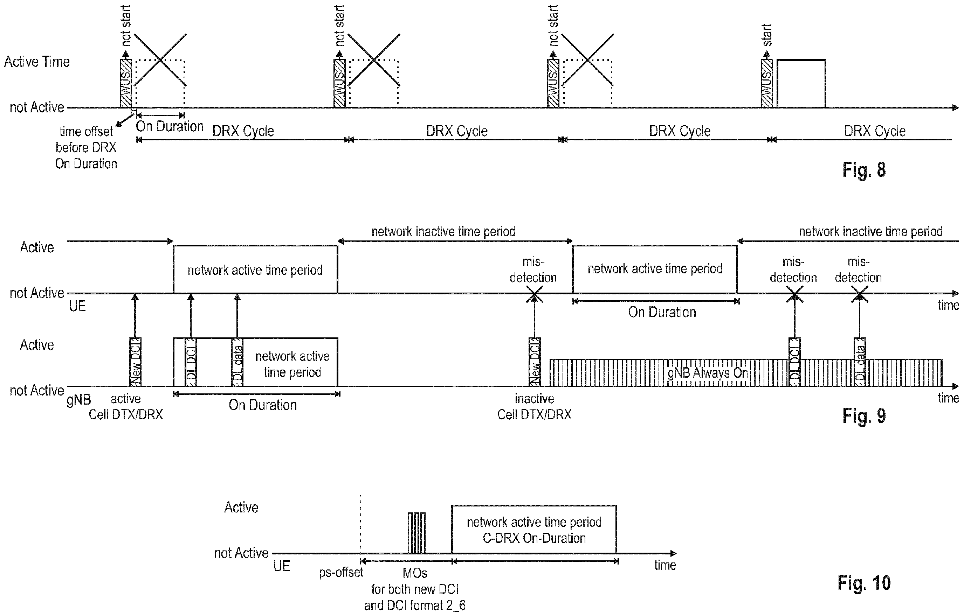

**Fig. 8** illustrates an exemplary and simplified implementation of the wake-up signal and its effect on the DRX operation and the PDCCH monitoring operation at the UE, taking some of the above assumptions into account. As apparent therefrom, the UE monitors the PDCCH to acquire the Wake-up signal at the appropriate timing (see illustrated "time offset before DRX On Duration") before the configured On-Duration time period of the DRX function at every DRX cycle. Depending on what the Wake-up signal (e.g. DCI format 2_6) indicates ("not start " or "start"), the UE then follows the indication. For instance, if the WUS indicates "not start", the UE does not start the drx-onDurationTimer for the next long DRX cycle (UE continues to sleep) and thus does not monitor the PDCCH during the next On-Duration (the On-Duration being illustrated as dotted and crossed out) in case the WUS (e.g. DCI format 2_6) indicates "start", the UE starts the drx-onDuratioTimer for the next long DRX cycle and monitors the PDCCH during the next On-Duration period (the OnDuration illustrated with a full line and not crossed out).

As mentioned above, power saving is critical to UE requirements in the future. The wake-up signal is one way on how to facilitate reducing the number of times the UE needs to wake-up to monitor the PDCCH during the DRX On-Durations.

### Network Energy Saving

Network energy saving is of great importance for environmental sustainability, to reduce environmental impact and for operational cost savings. 3GPP is currently studying network energy saving for Release 18 and has approved a new work item. During a previous study phase, a network energy consumption model for the base station was defined, and potential network energy saving techniques can be classified into different domains, including time, frequency, spatial and power domain. The techniques in time and frequency domains mainly aim to reduce the power consumption for a dynamic part by trying to shut down more symbols on one or more carriers to achieve BS micro sleep. The techniques in the spatial and power domains mainly aim to reduce the power consumption of the TRX (transmission) chains and PAs (power amplifiers) by trying to shut down more spatial elements and/or reduce transmission power/power spectrum density, or increase the PA efficiency.

3GPP has preliminarily agreed to introduce a cell DTX/DRX scheme for power saving at the network side (while DRX is being applied at the UE side for power saving at the UE).

Some preliminary agreements may have been reached at 3GPP, which, although not mandatory, can be exemplary assumed for the sake of further explanations.
1. For instance, a cell DTX/DRX configuration is explicitly signaled to the UEs.
2. A periodic cell DTX/DRX pattern is configured by UE specific RRC signaling.
3. The cell DTX/DRX configuration contains at least: periodicity, start slot/offset, on duration.
4. As a baseline, cell DTX/DRX is activated/deactivated implicitly by RRC signaling, i.e. activated immediately once configured by RRC and deactivated once the RRC configuration is released.
5. From RAN2 point of view, the majority of companies see a benefit with L1 signaling for Cell DTX/DRX activation/deactivation.
6. As a baseline, UE does not monitor SPS occasions during Cell DTX non-active periods. As baseline, gNB is assumed by the UE to be not transmitting PDSCH to that UE on such SPS occasions during the Cell DTX non-active period.
7. As a baseline, UE does not transmit on CG occasions during Cell DRX non-active periods.
8. As a baseline, UE does not transmit on SR occasions overlapping with Cell DRX non-active periods, e.g. SR transmissions are dropped during the non-active period.
9. The understanding for the gNB scheduling behaviour for new transmissions during Cell DTX non-active periods is that the gNB does not schedule UE-specific dynamic grants/assignments, even if the UE is in C-DRX Active time. The UE need not monitor PDCCH for dynamic grants/assignments for new transmissions during Cell DTX non-active periods, even if the UE is in C-DRXActive time.
10. It has been initially agreed that the L1 signaling using PDCCH for the Cell DTX/DRX activation/deactivation is without HARQ feedback (or at least dependent on the UE capability).

Other aspects of the cell DTX/DRX mechanism are still under discussion.

For instance, with respect to the L1-signaling for Cell DTX/DRX activation/deactivation, one alternative is to use a new DCI format 2_X. One sub-issue is whether or not the PDCCH monitoring configuration for the new DCI format is identical to the PDCCH monitoring configuration for DCI format 2_6 (see e.g. above wake-up signal) (assuming the UE monitors both DCI formats). This would facilitate that the DCI size budget is not increased and that the number of required Blind Decodings (of DCIs) is not increased.

Furthermore, it is not been agreed whether a new RNTI will be used to scramble the CRC of the new DCI format 2_X, or whether an already existing RNTI will be reused.

### Further Improvements

The inventors have identified the following issues in connection with the above new cell DTX/DRX power saving mechanism.

In said connection, HARQ feedback might not be used for the L1 signaling of the Cell DTX/DRX activation/deactivation. One key aspect is thus to ensure the reliability for the L1 signaling of the Cell DTX/DRX activation/deactivation. If the UE does not receive the Cell DTX/DRX activation/deactivation, this might lead to a misalignment of the Cell DTX/DRX at the UE side and the gNB side.

For instance, misalignment might involve that
- the gNB is transmitting (e.g. downlink data or a scheduling PDCCH) but the UE is not monitoring, or
- the gNB is not transmitting, but the UE is monitoring, or
- the UE is transmitting (e.g. uplink data), but the gNB is not receiving, or
- the UE is not transmitting, but the gNB is receiving.

One example misalignment is illustrated in Fig. 9, which shows the operation of the Cell DTX/DRX function at the UE and gNB side and shows the exchange of the new DCI for activating/deactivating the Cell DTX/DRX mechanism. It is assumed that the UE is configured with the Cell DTX/DRX function, including e.g. the configuration of network active time periods (may be called e.g. "CellActivationTimer") and network inactive time periods (e.g. where the "CellActivationTimer" is not running). At the beginning, it is assumed that the Cell DTX/DRX function is inactive and that the gNB activates the Cell DTX/DRX. In order to inform accordingly a UE, the gNB transmits the new DCI to the UE. It is assumed that the UE is able to correctly receive the DCI, such that both the gNB and the UE operate according to the Cell DTX/DRX function, including the cell active time periods and cell inactive time periods. As illustrated in Fig. 9, the gNB is still able to communicate with the UE during the cell active time periods. The gNB is thus able to transmit a DL DCI and a corresponding DL data (scheduled by the DL DCI), which can be correctly received by the UE.

However, it is exemplarily assumed that the next DCI for deactivating the Cell DTX/RDX is misdetected by the UE, which thus results in a misalignment of the Cell DTX/DRX function at the UE and gNB. While the gNB does no longer operate according to the Cell DTX/DRX (e.g. gNB is always on), the UE continues to operate according to the Cell DTX/DRX as configured (e.g. including the cell active time periods and cell inactive time periods).

The gNB is not aware of the misdetection/misalignment and assumes that the UE will be able to receive the DL DCI and the corresponding DL data (scheduled by the DL DCI), which are transmitted outside the configured cell active time period.

In any case, misalignment leads to unnecessary energy consumption at the gNB or UE or both. Further, the system overhead becomes larger, because transmissions from the gNB or the UE are not monitored and thus not received. These transmission may further introduce unnecessary intracell and/or inter-cell interference.

RAN2 is recommended to additionally support MAC-CE based signaling if reliability is not deemed ensured for the L1-based signaling of the Cell DTX/DRX activation/deactivation. However, this would have the disadvantage of introducing yet another mechanism, which further is slower than the L1-based mechanism.

Therefore, the inventors have identified the necessity to enhance the reliability of the L1-signalingbased Cell DTX/DRX activation/deactivation.

One further necessity is to provide a mechanism to identify the misalignment and to then fix the misalignment, preferably with low latency.

A further issue is the possible impact of the dual monitoring of the new DCI and the DCI format 2_6, based on the identical PDCCH monitoring configuration. In particular, it might be agreed in the future to configure both the Rel. 16 UE-side power saving feature (DCI format 2_6) and the new Rel. 18 network-side energy saving feature. However, no detailed agreements have been reached by 3GPP. One assumption is that the new DCI is monitored also before the corresponding Cell-side OnDurationTimer (could also be termed "CellActivationTimer" in the following), conceptually corresponding to how DCI format 2_6 is monitored before the UE-side C-DRX OnDurationTimer. One further assumption is that the CellActivationTimer of Cell DTX/DRX and the OnDurationTimer of C-DRX are aligned together, so as to improve the network-energy saving performance. The following problems and issues could arise from the above.

From gNB perspective, e.g. it is to be determined whether the new DCI for Cell DTX/DRX (de)activation should be transmitted in the PDCCH monitoring occasion (MO) overlapping with the DCI format 2_6. If both DCls are transmitted in the same or overlapping PDCCH MOs, reliability could be degraded due to the shared and limited resource, which in turn could cause a misalignment in the Cell DTX/DRX operations at the UE and gNB sides.

This behaviour is exemplarily illustrated in a simplified manner in Fig. 10, where three PDCCH monitoring occasions (MOs) are illustrated that would be available for carrying both the new DCI for (de)activation of the Cell DTX/DRX and the DCI format 2_6 for the wake up signal. In the illustration of Fig. 10, it is further exemplarily assumed that the Cell active time period and the UE-side C-DRX On Duration period are aligned with each other, in this case complete overlapping.

From UE perspective, e.g. it is to be determined whether the UE should monitor for both or just one of the two DCIs in the overlapping MO resource. Furthermore, it is to be determined what the UE default behaviour is in a case where the new DCI for Cell DTX/DRX (de)activation is not detected, or in case the detection / monitoring is skipped for another reason.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term **"monitoring"** or **"monitor"** can be broadly understood e.g. as the process of trying to decode a possible candidate for receiving a DCI message, e.g. based on a particular format. Such a decoding attempt can also be called blind decoding. On the other hand, in a broader sense "monitoring" can be understood as the processing of detecting/receiving/decoding a possible downlink channel or signal, such as, but not limited to, PDCCH, semi-persistently or dynamically scheduled PDSCH, CSI-RS, SSB, DMRS and PRS.

The expressions **"monitoring occasion",** "downlink control channel monitoring occasion", "PDCCH monitoring occasion" and similar expressions are to be understood broadly, e.g. as a period of time (e.g. a set of one or more consecutive symbols) of a time slot where the UE is configured to monitor the corresponding downlink control channel (e.g. PDCCH, e.g. according to PDCCH candidates). For example, the UE determines monitoring occasions for each search space and search space set it is configured with.

The expression **"search space set"** can be broadly understood as a set of search spaces, with a plurality of search spaces, each search space comprising one or a plurality of possible candidates for receiving a DCI message. For instance, a **"search space"** groups various candidates with the same aggregation level but with a different format of the DCI message. In turn, for instance, the set of search spaces may then comprise search spaces of different aggregation levels, but being associated with a same set of time-frequency resources to be monitored (e.g. a same CORESET). Particular exemplary implementations of search space sets are given by the 3GPP 5G NR standards, as explained above.

The expression **"DCI format 2_X"** will be primarily used in the following as a placeholder name to refer to that DCI message (having a format named 2_X) transmitted by the base station to the UE to inform about activation and deactivation of the network-side DTX/DRX function (see above Cell DTX/DRX). The actual format and content of the "DCI format 2_X" has not been decided by 3GPP. For instance, however, the information about activation and deactivation of the network-side DTX/DRX function can be encoded into a field (e.g. of one or more bits) of the DCI format 2_X.

The expressions **"first DCI monitoring window"** and **"second DCI monitoring window**" refer to windows in the time domain (time windows) during which the UE expects to receive the DCI format 2_X as part of the network-side DTX/DRX function. The UE will monitor during the first / second DCI monitoring windows, in corresponding monitoring occasions, configured to occur during said DCI monitoring windows. In the following these expressions "first/second DCI monitoring window" will be used. However, instead of defining two windows, the concept may equally be defined by one window that has two parts or sections. Other expressions may be used instead as well, such as "time period".

In a broader sense, the concept of "first DCI monitoring window" and "second DCI monitoring window" can also be understood as referring to "first PDCCH resource" and "second PDCCH resource", which respectively refer to time and frequency domain where the UE expects to receive the DCI format 2_X as part of the network-side DTX/DRX function. The time domain resource can be limited by a time window, and the frequency domain resource can be limited by one or a plurality of PRBs or a CORESET.

The expression **"network active time period"** is to be understood in the context of a network-side DTX/DRX function (such as the Cell DTX/DRX function discussed above for the 5G NR agreements) and is to be understood as a period of time during which the network is active, e.g. the base station may transmit and/or receive at any time. Other expressions may be used instead, such as "CellActivationTime" or "CellActivationTimer" (exemplarily assuming that a corresponding timer is running during said time), or "OnDuration" or "CellOnDuration" etc.

Conversely, the expression **"network inactive time period"** is to be understood as a period of time during which the network is not active, e.g. the base station does not transmit and receive (at least some of data and control). Consequently, from the UE perspective, the UE does not expect to receive and/or transmit one or more of data, control signal and/or reference signals during said network inactive time period. Other expressions may be used instead, such as "sleep time period" or "off time period" or "cell sleep time period" etc.

The expression **"first/second DCI monitoring window associated with a network active time period**" is to be understood in that both DCI monitoring windows refer to the same network active time period of the network-side DTX/DRX function. Instead of using the expression "associated with", other expressions may be used such as "configured for", "relating to" etc. For instance, each network active time period of the network-side DTX/DRX function will have the same first and second DCI monitoring windows associated with it. The first/second DCI monitoring windows thus provide opportunities, agreed between the UE and the base station, for the gNB to control the UE with regard to the activation and deactivation of the network-side DTX/DRX function.

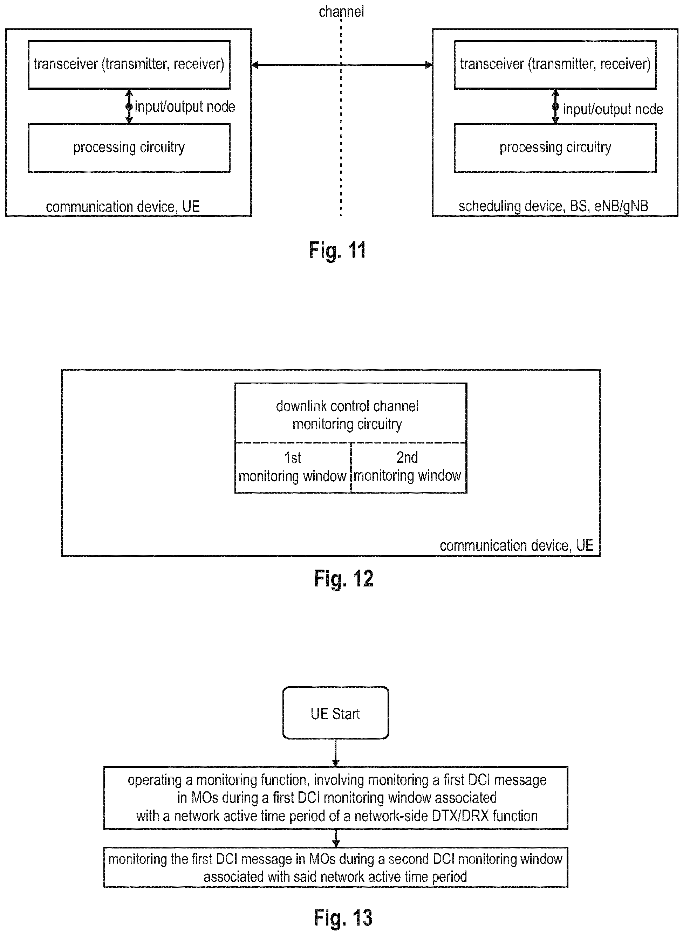

**Fig. 11** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved procedure for controlling the network-side DTX/DRX mechanism (see Cell DTX/DRX above), in short improved cell DTX/DRX control procedure.

In connection with these solutions, improved UEs, improved base stations and improved integrated circuits are presented, which participate separately or together in the improved cell DTX/DRX control procedure. Corresponding methods for the UE behavior and the base station behavior are provided as well. The integrated circuits may correspond to the UE and base station, and respectively their behavior.

As an overview, according to a First solution, two different DCI monitoring windows are associated with the same network active time period of the network side DTX/DRX function, during which the UE can monitor for reception of the DCI format 2_X that informs the UE on activation/deactivation of the network side DTX/DRX function at the network side.

Furthermore, a Second Solution provides an improved way of interaction between monitoring for the DCI format 2_X (informing the UE on activation/deactivation of the network side DTX/DRX function at the network side) and the DCI format 2_6 (wake up signal for the UE-side DRX function).

The following solutions can be based on some or a combination of the different mechanisms described above in context of the exemplary 3GPP 5G-NR implementations, including e.g. the use of the signaling mechanisms for configuring the 5G NR measurement reporting (e.g. using information elements for measurement configuration and reporting), as currently defined in 3GPP.

### First solution - two DCI monitoring windows

**Fig. 12** illustrates a simplified and exemplary UE structure according to a basic implementation underlying the first solution presented in more detail below. In one example, the UE structure can be implemented based on the general UE structure explained in connection with Fig. 11. The various structural elements of the UE illustrated in said Fig. 12 can be interconnected between one another e.g., with corresponding input/output nodes (not shown) e.g., in order to exchange control and user data and other signals. Although not shown for illustration purposes, the UE may include further structural elements.

As apparent from Fig. 12, the UE may include a downlink control channel monitoring circuitry, which in turn is able to operate based on a first DCI monitoring window and a second DCI monitoring window. In the present case as will become apparent from the below disclosure, the receiver of the UE can thus be exemplarily configured to at least partly perform one or more of receiving the DCI format 2_X, receiving a DCI format 2_6, receiving a configuration of the network-side DTX/DRX function, etc.

In the present case as will become apparent from the below disclosure, the processing circuitry of the UE can thus be exemplarily configured to at least partly perform one or more of operating a monitoring function, monitoring in two different DCI monitoring windows, determining the two DCI monitoring windows, etc.

In the present case as will become apparent from the below disclosure, the transmitter of the UE can thus be exemplarily configured to at least partly perform one or more of transmitting an uplink transmission, etc.

One exemplary procedure as will be disclosed in more detail further below is implemented by a UE that includes the following. Processing circuitry of the UE operates a monitoring function that involves monitoring for reception of a first downlink control information, DCI, message on a downlink control channel, wherein the first DCI message is for informing the UE on activation or deactivation of a network-side discontinuous transmission and reception, DTX/DRX, function. The processing circuitry monitors for reception of the first DCI message in one or more monitoring occasions during a first DCI monitoring window associated with a network active time period of the network-side DTX/DRX function. The processing circuitry monitors for reception of the first DCI message in one or more monitoring occasions during a second DCI monitoring window associated with said network active time period, said second DCI monitoring window being subsequent to the first DCI monitoring window.

A corresponding exemplary method comprises the following steps performed by a UE:
operating a monitoring function that involves monitoring for reception of a first downlink control information, DCI, message on a downlink control channel, wherein the first DCI message is for informing the UE on activation or deactivation of a network-side discontinuous transmission and reception, DTX/DRX, function,
monitoring for reception of the first DCI message in one or more monitoring occasions during a first DCI monitoring window associated with a network active time period of the network-side DTX/DRX function,
monitoring for reception of the first DCI message in one or more monitoring occasions during a second DCI monitoring window associated with said network active time period, said second DCI monitoring window being subsequent to the first DCI monitoring window.

A corresponding sequence diagram for an exemplary UE behaviour in line with the abovediscussed UE and UE method is presented in **Fig. 13****.**

The above-described improved procedure thus achieves the object and overcomes some of the drawbacks explained above. In particular, the improved Cell DTX/DRX control procedure provides two windows of opportunity for receiving the DCI format 2_X for controlling the Cell DTX/DRX function.

Hypothetically assuming only one DCI monitoring window, reliability for reception of the new DCI 2_X could be improved by the gNB transmitting repetitions of the DCI format 2_X. In that case, overhead during a short span would be large, however. By providing two separate windows, respectively with one or more monitoring occasions (MOs), it is possible for the gNB to balance the reliability and resource overhead to transmit the DCI of format 2_X between the two DCI monitoring windows. For instance, in case the UE channel condition is good, a relatively smaller number of transmissions (repetitions) of the DCI format 2_X would be sufficient in the first window. Furthermore, if a mis-detection occurs during the first DCI monitoring window, the gNB can recover with a short latency by transmitting/repeating the DCI format 2_X transmission during the second DCI monitoring window.

Some exemplary implementations of the improved cell DTX/DRX control procedure also involve improved base stations. Correspondingly, the improved cell DTX/DRX control procedure also provides improved base stations that participate therein, as will be explained in the following.

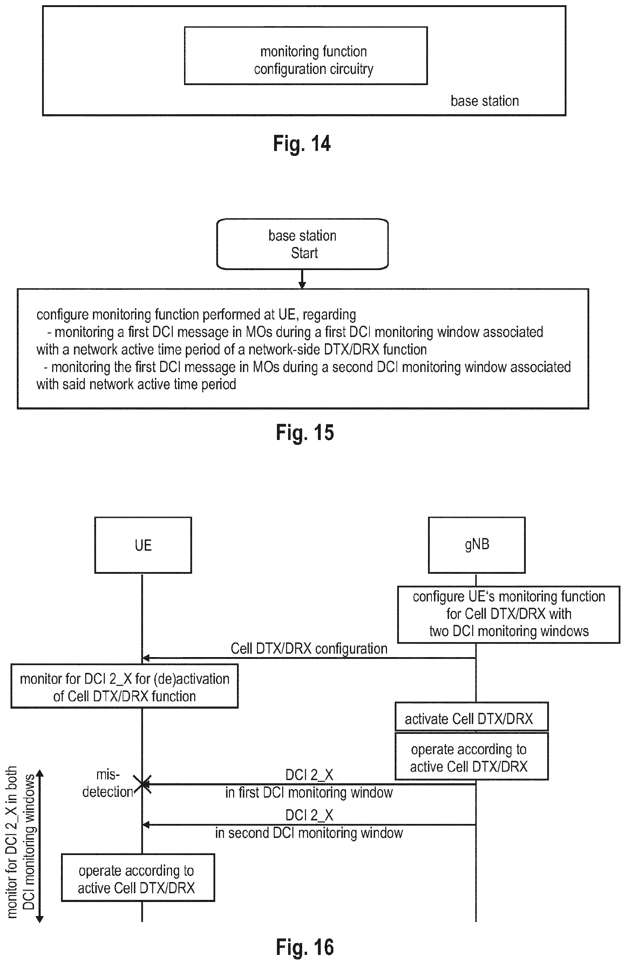

**Fig. 14** illustrates a simplified and exemplary base station structure according to an exemplary implementation of the improved cell DTX/DRX control procedure, which can be implemented based on the general base station structure explained in connection with Fig. 11. The various structural elements of the base station illustrated in said Fig. 14 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a monitoring function configuration circuitry.

In the present case as will become apparent from the below disclosure, the receiver of the base station can thus be exemplarily configured to at least partly perform one or more of receiving an uplink transmission from the UE, etc.

In the present case as will become apparent from the below disclosure, the processing circuitry of the base station can thus be exemplarily configured to at least partly perform one or more of configuring a monitoring function at the UE, configuring a network-side DTX/DRX function, determining two DCI monitoring windows, etc.

In the present case as will become apparent from the below disclosure, the transmitter of the base station can thus be exemplarily configured to at least partly perform one or more of transmitting the DCI format 2_X, transmitting a DCI format 2_6, transmitting a configuration of the network-side DTX/DRX function, etc.

One exemplary procedure as will be disclosed in more detail further below is implemented by a base station that includes the following. A processing circuitry of the base station configures a monitoring function performed at a user equipment, UE, wherein the monitoring function involves monitoring for reception of a first downlink control information, DCI, message on a downlink control channel, wherein the first DCI message is for informing the UE on activation or deactivation of a network-side discontinuous transmission and reception, DTX/DRX, function. The monitoring function involves monitoring for reception of the first DCI message in one or more monitoring occasions during a first DCI monitoring window associated with a network active time period of the network-side DTX/DRX function. The monitoring function involves monitoring for reception of the first DCI message in one or more monitoring occasions during a second DCI monitoring window associated with said network active time period, said second DCI monitoring window being subsequent to the first DCI monitoring window.

A corresponding method comprises the following steps performed by the base station:
configuring a monitoring function performed at a user equipment, UE, wherein the monitoring function involves monitoring for reception of a first downlink control information, DCI, message on a downlink control channel, wherein the first DCI message is for informing the UE on activation or deactivation of a network-side discontinuous transmission and reception, DTX/DRX, function,
wherein the monitoring function involves monitoring for reception of the first DCI message in one or more monitoring occasions during a first DCI monitoring window associated with a network active time period of the network-side DTX/DRX function, and
wherein the monitoring function involves monitoring for reception of the first DCI message in one or more monitoring occasions during a second DCI monitoring window associated with said network active time period, said second DCI monitoring window being subsequent to the first DCI monitoring window.

A corresponding sequence diagram for an exemplary base station behavior in line with the abovediscussed base station and corresponding method is illustrated in **Fig. 15**. The sequence diagram illustrates an exemplary and simplified implementation of the above presented base station method.

**Fig. 16** is a signaling diagram of an exemplary and simplified implementation of the improved cell DTX/DRX control procedure, illustrating the exchange of messages between the different participating entities (here the UE and gNB) and the steps performed at these entities. The UE behaviour and gNB behaviour follow the above described UE and base station and the respective methods. Fig. 16 illustrates in particular that the gNB configures the UE's monitoring function at least for proper operation of the Cell DTX/DRX function, including the configuration of the two DCI monitoring windows. In the specific example, the gNB transmits the configuration of the Cell DTX/DRX function to the UE, which may include the necessary information to monitor for the reception of the DCI format 2_X during the two DCI monitoring windows.

At some point, the gNB decides to activate the Cell DTX/DRX (exemplarily assuming that the Cell DTX/DRX function is not active at said point in time). Otherwise, although not shown in Fig. 16, the gNB may decide to deactivate the Cell DTX/DRX (exemplarily assuming that the Cell DTX/DRX is active at said point in time).

In order to inform the UE about the activation (or deactivation) of the Cell DTX/DRX function, the gNB transmits the DCI format 2_X message in the first DCI monitoring window. It is exemplarily assumed that the UE is not able to properly receive the DCI format 2_X message.

The gNB transmits another DCI format 2_X message in the second DCI monitoring window, which this time is received by the UE, which thus also operates according to the active Cell DTX/DRX. By providing two separate DCI monitoring windows, respectively with one or more monitoring occasions (MOs), it is possible for the gNB to balance the reliability and resource overhead to transmit the DCI of format 2_X between the two windows.

Different and exemplary implementations of the improved cell DTX/DRX control procedure are explained in the following. For the explanation of the different implementations, some exemplary and simplifying assumptions are made.

According to one exemplary assumption, the Cell DTX/DRX function can be set up and configured by the gNB, and then the Cell DTX/DRX configuration can be provided to the UE. The gNB and UE thus should have the same understanding about the Cell DTX/DRX function. One exemplary option to provide the Cell DTX/DRX configuration to the UE is to use a suitable message of the RRC protocol.

The Cell DTX/DRX configuration may configure the relevant parameters for the Cell DTX/DRX function, including for example parameters relating to one or more of:
- network active time periods and network inactive time periods (e.g. one or more of starting time, end time, offsets, duration, timer value for a network active timer),
- the monitoring time window(s) for receiving a DCI format 2_X, and
- monitoring occasions within the monitoring time window(s) for receiving DCI format 2_X.

Furthermore, the UE and gNB should also have a same understanding of the expected gNB behaviour during the network inactive time periods, e.g. whether and which type of uplink transmissions the gNB still receives, and whether and which type of downlink transmissions the gNB still performs even during a network inactive time period of an active Cell DTX/DRX function.

According to one example implementation, the initial configuration of the Cell DTX/DRX configuration at the UE (e.g. by use of a RRC message) might result in that the Cell DTX/DRX is immediately considered active by the UE. In said case, no additional and separate activation of the Cell DTX/DRX function is necessary to be performed by the gNB. Alternatively, the initial configuration of the Cell DTX/DRX configuration at the UE does not result in that the Cell DTX/DRX function is immediately considered active by the UE. In said case, the gNB would have to transmit an additional activation message (such as the DCI format 2_X message).

According to one exemplary assumption, the Cell DTX/DRX function involves a pattern of network active time periods and network inactive time periods, as already mentioned above.

The network inactive time periods allow for power saving at the network side (and UE side), because during said periods of inactivity the gNB reduces one or more of its reception operations and transmission operations. Put differently, during a network inactive time period, the gNB is not expected to transmit one or more of downlink data and downlink control, such that the UE does not need to monitor for such downlink data or downlink control information during the network inactive time period. Similarly, during a network inactive time period, the gNB is not expected to receive one or more of uplink data and uplink control information, such that the UE need not transmit such uplink data or uplink control information.

Conversely, the network active time periods allow for normal reception and transmission operations by the gNB (e.g. as if the cell DTX/DRX is not active or not configured). Put differently, during a network active time period, the gNB is expected to transmit one or more of downlink data and downlink control and the UE is expected to receive one or more of uplink data and uplink control. The DL reception for Cell DTX and the UL transmission for Cell DRX can be configured either jointly or separately for the UE.

The extent to which the gNB reduces its reception/transmission operations can be different and may vary significantly. According to one example, one or more of the reception and transmission operation can be reduced (almost) completely.

According to other examples, one or more of the reception and transmission operation can be reduced significantly, however still allowing the gNB to perform specific reception and/or transmission operations that are considered important. One such important transmission operation is the transmission of the DCI format 2_X, which can be transmitted by the gNB also outside the network active time period (see later Variants 1, 2, 3 of the first solution).

As an example of a reduced transmission operation at the gNB, as presently envisaged by the 3GPP developments, the UE does not need to monitor the SPS (Semi-persistently scheduled) occasions for reception of a downlink transmission from the gNB during such network inactive time periods, because the gNB is expected to not transmit a PDSCH to the UE on such SPS occasions during the network inactive time periods.

As still another example of a reduced transmission operation at the gNB, the UE does not need to monitor for a scheduling DCI (be it for uplink or downlink) during the network inactive time period, because the gNB is expected to not transmit a PDSCH to the UE nor to receive a PUSCH transmission from the UE.

As another example of a reduced reception operation at the gNB, the UE does not transmit a PUSCH transmission to the gNB at previously-configured CG occasions (Configured-Grant occasions), such that the gNB does not need to monitor such CG occasions for reception of PUSCH transmissions from the UE.

As still another example of a reduced reception operation at the gNB, as presently envisaged by the 3GPP developments, the UE does not transmit a scheduling request to the gNB during the network inactive time period, such that the gNB need not monitor for such scheduling requests during the network inactive time period.

Still further, the reduced reception operation at the gNB may influence e.g. one or more of PUCCH, CG (Configured Grant) or DG (Dynamic Grant) PUSCH, PRACH, SRS, SR on PUCCH, CSI on PUCCH/PUSCH, HARQ-ACK on PUCCH/PUSCH.

According to one exemplary assumption, it is assumed that the active/inactive status of the Cell DTX/DRX function at the gNB can be informed to the UE based on the DCI format 2_X. Correspondingly, the following UE behaviour can be assumed with respect to the indication made by the DCI format 2_X. Correspondingly, the UE determines whether the cell DTX/DRX function is active or inactive based on said DCI format 2_X and thus derives how the gNB is currently operating.

In more detail, in case the DCI format 2_X message indicates activation of the Cell DTX/DRX function, the UE determines that the gNB operates according to the Cell DTX/DRX configuration. This might result in that the UE controls its reception and transmission operations according to said network-side DTX/DRX function. For instance, during network active time periods of the Cell DTX/DRX operation, the UE controls its reception and transmission in the usual manner, because the gNB can be expected to receive and transmit user data and control information. On the other hand, during network inactive time periods of the Cell DTX/DRX operation, the UE controls its reception and transmission operations in dependence of the reduced gNB reception and transmission operations during said network inactive time periods (see above for details on exemplary reduced transmission and reception operations at the gNB during a network inactive time period of the Cell DTX/DRX function); e.g. the UE does not expect to receive a downlink transmission (be it control or user data) from the gNB, and the UE does not transmit an uplink transmission (be it control or user data) to the gNB.

According to one exemplary option, the network active time period is implemented at the UE side (and optionally also at the gNB side), by use of a timer (called e.g. network active timer). Consequently, when the DCI format 2_X indicates activation of the cell DTX/DRX function by the gNB, this network active timer can be started by the UE at the starting point of a network active time period as initially configured by the cell DTX/DRX configuration. The network active timer is started with a timer value so as to expire at the end point of said network active time period as initially configured by the cell DTX/DRX configuration.

On the other hand, in case the DCI format 2_X message indicates deactivation of the Cell DTX/DRX function, the UE determines that the gNB operates without applying the Cell DTX/DRX configuration (e.g. without any network active/inactive time periods). In this sense, the gNB is always on. This results in that the UE controls its reception and transmission without having to consider such an inactive Cell DTX/DRX configuration. For instance, the network inactive time periods put no additional limitation on the reception and transmission operations by the UE.

According to an exemplary 5G NR compliant implementation, the UE behaviour could follow the definitions for the Cell DTX/DRX function in the 5G NR 3GPP standards and agreements, as explained in the above section relating to Network Energy Saving.

Moreover, in further different implementations of the first solution, it is beneficial to unambiguously define the UE behaviour in case the UE does not receive the DCI format 2_X, e.g. how to behave in the absence of a clear indication regarding activation/deactivation of the Cell DTX/DRX function at the network side. In particular, after the second DCI monitoring window, in case the UE has not received the DCI format 2_X in either of the two DCI monitoring windows, the UE may be behave according to one of the following four options.

According to a first option, the UE simply assumes that the network-side DTX/DRX function is active and proceeds accordingly. Thus, irrespective of the operation of the Cell DTX/DRX function at the gNB side, the UE behaves by following the Cell DTX/DRX function (e.g. taking into account network active time periods and network inactive time periods). This would have the benefit that the UE does not unnecessarily monitor the downlink control channel and does not unnecessarily transmit an uplink transmission outside the network active time periods of the Cell DTX/DRX function, e.g. when assuming that the gNB also operates according to an active Cell DTX/DRX function.

According to a second option, the UE simply assumes that the network-side DTX/DRX function is inactive and proceeds accordingly. Thus, irrespective of the operation of the Cell DTX/DRX function at the gNB side, the UE behaves by not following the Cell DTX/DRX function (e.g. disregarding network active time periods and network inactive time periods). This would have the benefit that the UE can still be reached by the gNB. However, the UE behaviour according to the second option may result in that the UE performs unnecessary uplink transmissions that the gNB might not properly receive (when during a network inactive time period of an active Cell DTX/DRX function at the gNB).

According to an exemplary variation of the first and second options, the UE is instructed on how to behave based on a previously defined (i.e. predefined), e.g. based on a RRC configuration.

According to a third option, the UE simply proceeds by determining whether the network-side DTX/DRX function is active or inactive based on the indication according to the DCI format 2_X message that was most recently received by the UE. Put differently, the UE simply proceeds with the current UE behaviour as regards the cell DTX/DRX function, be it considered active or inactive at the UE based on a previously received DCI format 2_X message. This has the benefit that a gNB does not need to transmit a DCI format 2_X simply to maintain the same operation regarding the Cell DTX/DRX function. Otherwise, the gNB would have to transmit the DCI format 2_X at all instances of the first/second DCI monitoring windows so as to attempt controlling the UE appropriately.

According to a fourth option, the UE proceeds by determining whether the network-side DTX/DRX function is active or inactive based on the indication according to the DCI format 2_X message that was previously received within a validity period (validity duration). If no DCI format 2_X message was received within the validity period, the UE may proceed according to the first or second option (e.g. as configured).

In the following it is assumed that the UE follows the third option in case it does not receive the DCI format 2_X.

As apparent from the above, it was explained how two separate DCI monitoring windows are configured for the UE to receive the DCI format 2_X. According to different exemplary implementations, in addition to monitoring for the DCI format 2_X in the first DCI monitoring window, the UE may always or not always monitor the second DCI monitoring window for reception of the DCI format 2_X. In particular, the UE may determine to monitor for reception of the DCI format 2_X during the second DCI monitoring window:
- in case the DCI format 2_X message is not received during the first DCI monitoring window, or
- irrespective of whether the DCI format 2_X message is received or not during the first DCI monitoring window.

Correspondingly, in the first option, the UE behaviour regarding the monitoring of the DCI format 2_X in the second DCI monitoring window depends on whether or not the UE was able to properly receive the DCI format 2_X in the first DCI monitoring window. By making the monitoring in the second DCI monitoring window dependent on the reception of the DCI format 2_X in the first DCI monitoring window, the UE might further reduce the necessary monitoring processing while at the same time allowing a higher reliability of the overall DCI format 2_X transmission.

From the gNB perspective, the transmission of the DCI format 2_X during the second DCI monitoring window may depend on whether the gNB is able to learn whether the UE received the DCI format 2_X already transmitted during the first DCI monitoring window.

For instance, a feedback protocol could be implemented for the transmission of the DCI format 2_X, in which case the gNB would receive a direct feedback from the UE regarding the reception of the DCI format 2_X at the UE. However, as currently understood from the 3GPP agreements, such a feedback protocol (e.g. HARQ) might eventually not be implemented for the transmission of the DCI format 2_X.

Nonetheless, the gNB could be able to indirectly learn whether or not the UE properly received the DCI format 2_X, due to a possible resulting misalignment, e.g. when not receiving a scheduled uplink transmission or not receiving feedback for a scheduled downlink transmission.

For example, after the gNB transmits the DCI format 2_X during the first DCI monitoring window for deactivation of the cell DTX/DRX function at the gNB, the gNB might further transmit a scheduling DCI, for instance for scheduling a downlink transmission then also transmitted by the gNB or for scheduling an uplink transmission. In case the UE did not properly receive the DCI format 2_X during the first DCI monitoring window, the UE might still proceed according to an activated cell DTX/DRX function and thus might not expect a scheduling DCI from the gNB during a network inactive time period. Correspondingly, they UE would not receive the scheduling DCI and will not receive the corresponding downlink transmission nor perform the scheduled uplink transmission. In either case, in the absence of a suitable transmission from the UE in response to a scheduling DCI, the gNB may determine a misdetection of the DCI format 2_X transmitted during the first DCI monitoring window.

There are at least the following two possible implementations.

According to a first implementation, the gNB does not transmit the DCI format 2_X during the second DCI monitoring window, in case it has received feedback (direct or indirect feedback as explained above) that the UE has properly received the DCI format 2_X during the first DCI monitoring window. Conversely, the gNB transmits the DCI format 2_X also during the second DCI monitoring window, in the absence of such positive feedback from the UE about the correct reception of the DCI format 2_X.

According to a second implementation, the gNB transmits the DCI format 2_X also during the second DCI monitoring window, irrespectively of whether or not the UE has received the DCI format 2_X during the first DCI monitoring window. This facilitates and expedites the operation of the gNB, because the gNB does not require and has not to consider whether or not the first transmission of the DCI format 2_X during the first DCI monitoring window was successful or not. Put differently, the gNB neither has to wait for nor process any possible (direct or indirect) feedback from the UE regarding the first transmission of DCI format 2_X for determining to repeat the transmission of the DCI format 2_X during the second DCI monitoring window.

In the above, some principles of the first solution were explained referring to the first and second DCI monitoring windows that are associated with a network active time period of the Cell DTX/DRX function, without however providing details of the time relation of the two DCI monitoring windows with regard to the network active time period.

According to an exemplary implementation, the two DCI monitoring windows are determined with reference to either the beginning (start) or the end of the network active time period. The configuration of the two DCI monitoring windows can be achieved on the basis of one or more of a first time offset, a second time offset and a duration. These parameters can be provided e.g. as part of the initial Cell DTX/DRX configuration (discussed above, also configuring e.g. the network active/inactive time periods) to the UE; in addition, these parameters could be adapted by subsequent re-configurations of the Cell DTX/DRX configuration. More detailed examples for these parameters will be given later with respect to Variants 1, 2, and 3.

According to one exemplary implementation, at least one of the first and second DCI monitoring windows is outside said network active time period. As a result, the remaining DCI monitoring window, if existent, would be inside the network active time period; in other words, the two DCI monitoring windows cover both part of the network active time period and part of the network inactive time period. More detailed examples will be given later with respect to Variants 1, 2, and 3.

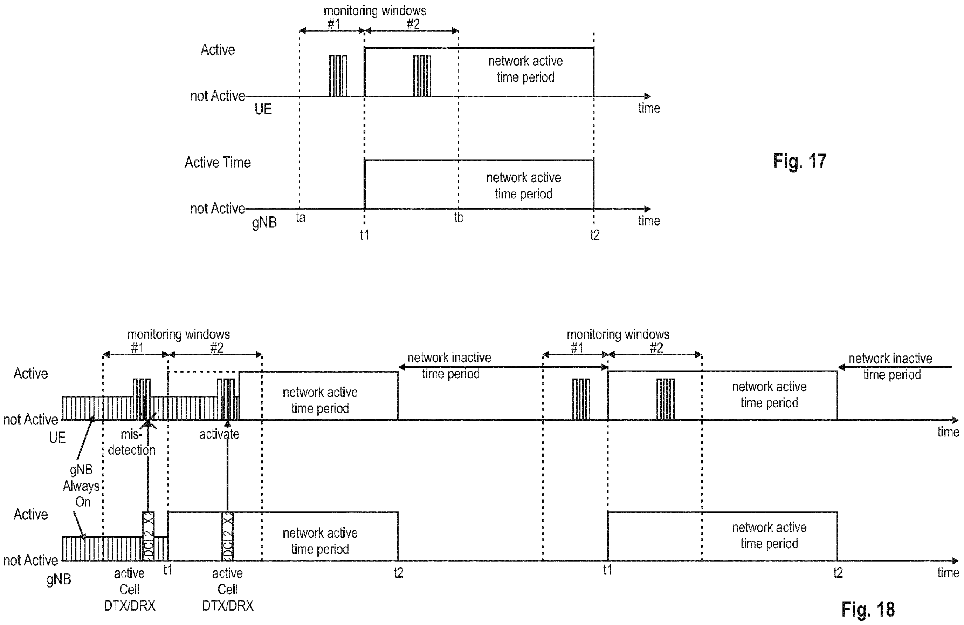

According to the first solution, the two DCI monitoring windows are primarily considered to be directly subsequent to each other; the second DCI monitoring window being subsequent and adjacent to the first DCI monitoring window (see e.g. Fig. 17, 19, 21). However, the configuration of the two DCI monitoring time windows need not be limited in said respect. For instance, the two DCI monitoring windows can have an interruption (or break) in between each other. In the following however, it is exemplarily assumed the second DCI monitoring window being subsequent and adjacent to the first DCI monitoring window.

In the above, some principles of the first solution were explained referring to the first and second DCI monitoring windows, particularly also the time relation of the DCI monitoring windows with regard to the network active time period. The first solution further provides three specific variants on how the first and second DCI monitoring windows are configured in relation to the network active time period and on the behaviour at the UE and gNB respectively for the three variants. In brief, Variant 1 is based on a configuration, according to which the first DCI monitoring window is configured to be right before the network active time period, while the second DCI monitoring window is configured to be at the beginning of the network active time period. Variant 2 is based on a configuration, according to which the first DCI monitoring window is configured to be right at the end of the network active time period, while the second DCI monitoring window is configured to be right after the network active time period. Variant 3 is based on a configuration according to which both the first and second DCI monitoring windows are configured to be right after the network active time period.

For sake of explanation, in the three variants, it is exemplarily assumed that three monitoring occasions are available in each of the two DCI monitoring windows for the gNB to be able to transmit the DCI format 2_X to the UE. This is however merely an example. More or less monitoring occasions can be configured in each of the two DCI monitoring windows.

In one example, monitoring occasions can be defined by the UE based on a search space configuration previously-received e.g. from the gNB. The search space configuration configures the monitoring occasions such that at least one monitoring occasion is configured during each of the two DCI monitoring windows. This facilitates that the UE receives the DCI format 2_X in either the first or second DCI monitoring window. According to one exemplary 5G NR compliant implementation, the monitoring occasions and search space configurations can be implemented according to current 5G NR 3GPP standards, e.g. as explained in the above section relating to Control information - Search space sets.

### Variant 1- before and at start of network active time period

According to the Variant 1, the two DCI monitoring windows are defined with regard to the starting point of the network active time period. The first DCI monitoring window is configured to be right before the network active time period, while the second DCI monitoring window is configured to be at the start of the network active time period. This configuration of the two DCI monitoring windows according to Variant 1 of the first solution is illustrated in an exemplary and simplified manner in **Fig. 17****.**

The two DCI monitoring windows can be defined e.g. based on the following parameters in the cell DTX/DRX configuration. In one option, the first DCI monitoring window is determined to start at time ta which is a first offset time before the starting point of said network active time period at time t1. The end point of the first DCI monitoring window would be the starting point of said network active time period at time t1.

The starting point of the second DCI monitoring window is the starting point of said network active time period at time t1. The end point of the second DCI monitoring window can be determined as well based on a time offset, particularly being at a time tb which is a second offset time after the starting point of said network active time period of time t1. Alternatively, the end point of the second DCI monitoring window could be determined based on a duration parameter, which gives the time duration of the first and second DCI monitoring windows together; thus, in combination with the starting point of the first DCI monitoring window, the UE can determine the end point of the second DCI monitoring window.

In the following, an exemplary operation of the UE and gNB for the improved cell DTX/DRX control procedure according to Variant 1 of the first solution will be explained, with reference to **Fig. 18****.** It is assumed that the UE and gNB have a Cell DTX/DRX configuration which is however currently inactive. In Fig. 18 this inactive Cell DTX/DRX is exemplarily illustrated with a vertically shaded block labelled "gNB always on".

Eventually, the gNB decides to activate the Cell DTX/DRX function, e.g. in order to save power. Thus, the gNB informs the UE about the active Cell DTX/DRX function by transmitting a corresponding DCI format 2_X in one of the monitoring occasions of the first DCI monitoring window.

The UE monitors these monitoring occasions during the first DCI monitoring window, but is still not able to receive the DCI 2_X message (indicated as "mis-detection" in Fig. 18).

This misdetection of the DCI format 2_X message at the UE creates a misalignment of the Cell DTX/DRX function at the UE and gNB. In particular, the gNB already operates according to the Cell DTX/DRX function, and particularly follows the network active time period as of time t1 (following the Cell DTX/DRX configuration). On the other hand, since the UE was not able to receive the DCI format 2_X in the first DCI monitoring window, the UE considers the gNB to be still always on (i.e. the Cell DTX/DRX being inactive).

Furthermore, the gNB uses the second DCI monitoring window, particularly the MOs configured for the UE therein, to again transmit the DCI format 2_X. For instance, the gNB may always transmit the DCI format 2_X in the second DCI monitoring window as well; especially in case where the gNB is not able to receive a (direct or indirect) feedback from the UE that the DCI format 2_X transmission in the first DCI monitoring window was received. In the example of Fig. 18, even during the misalignment, the UE will be able to receive a scheduling DCI transmitted by the gNB and correspondingly transmit an uplink transmission as scheduled or receive a downlink transmission as scheduled (because the UE assumes an always-on period by the gNB).

From UE perspective, since the UE did not receive a DCI format 2_X message during the first DCI monitoring window, the UE proceeds to monitor for the DCI format 2_X during the second DCI monitoring window. Correspondingly, the UE also monitors the MOs during the second DCI monitoring window and at this time is able to receive the DCI format 2_X. As a result, the UE understands that the gNB has activated its network-side DTX/DRX function, and follows the Cell DTX/DRX configuration. The UE behaviour thus takes into account the network active time period (during which the DCI format 2_X message was received) and also further network active/inactive time periods.

According to an exemplary implementation of Variant 1 of the first solution, it is assumed that the network active time period is implemented at the UE side by use of a timer (called e.g. the network active timer). Consequently, when the DCI format 2_X indicates activation of the cell DTX/DRX function, this network active timer is started by the UE at the starting point of a network active time period as initially configured by the cell DTX/DRX configuration. The network active timer is started with a timer value so as to expire at the end point of said network active time period as initially configured by the cell DTX/DRX configuration.

According to Variant 1 of the first solution, in case the DCI format 2_X is received in the first DCI monitoring window, the UE may proceed to start the network active timer at time t1 with a timer value as initially configured by the Cell DTX/DRX configuration. Differently, however, in case the DCI format 2_X is received in the second DCI monitoring time window after the starting point but before the end point of said network active time period, the not-yet-started network active timer is started by the UE with a reduced timer value such that the network active timer expires with the end point of the network active time period at time t2 as initially configured by the Cell DTX/DRX configuration. The initially configured time value of the network active timer needs to be reduced by a time offset that amounts to a time from the starting point of the network active time period until the DCI format 2_X is received and processed.

Therefore, regardless of whether the UE detects the activation DCI format 2_X message in the first or second DCI monitoring time window, the ending time of the network active time period is the same, e.g. as configured by the Cell DTX/DRX configuration. This allows to achieve alignment of the Cell DTX/DTX operation at the UE and the gNB even in those cases whether the first DCI format 2_X transmission fails. Due to the aligned Cell DTX/DRX operation, network power consumption can be reduced.

Although not illustrated in Fig. 18, in case the DCI format 2_X indicates deactivation of an active Cell DTX/DRX function, the UE, receiving said DCI format 2_X, just proceeds to operate without taking the Cell DTX/DRX function into account, e.g. monitors the downlink channel and transmits in the uplink.

One of the advantages of Variant 1, compared to e.g. Variant 2, is that it can be less complex and have less specification impact.

For instance, it may be exemplarily assumed that the network active period (cell active duration) can possibly be extended by the occurrence of a scheduling DCI, similar as done for the OnDuration of the C-DRX function. Variants 2 and 3 rely on the end of the network active time period for defining the two DCI monitoring windows. The end of the network active time period may thus however be a varying time point in certain cases and controlled by multiple timers such that it is more complicated for UE to determine the position of the first and second monitoring window for Variants 2 and 3. The below timers (including OnDurationTimer and others) are used for C-DRX, which are defined in TS38.321. When DRX is configured, the Active Time for Serving Cells in a DRX group includes the time while:
- *drx-onDurationTimer* or *drx-InactivityTimer* configured for the DRX group is running; or
- *drx-RetransmissionTimerDL, drx-RetransmissionTimerUL* or *drx-RetransmissionTimerSL* is running on any Serving Cell in the DRX group; or
- *ra-ContentionResolutionTimer*(as described in clause 5.1.5) or *msgB-ResponseWindow* (as described in clause 5.1.4a) is running; or
- a Scheduling Request is sent on PUCCH and is pending (as described in clause 5.4.4 or 5.22.1.5). If this Serving Cell is part of a non-terrestrial network, the Active Time is started after the Scheduling Request transmission that is performed when the *SR_COUNTER* is 0 for all the SR configurations with pending SR(s) plus the UE-gNB RTT; or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

On the other hand, the beginning of the network active period is semi-statically configured by RRC, such that it is easier for UE to determine. Therefore, Variant 1 is less complex and has less specification impact.

### Variant 2 - at end of and after network active time period

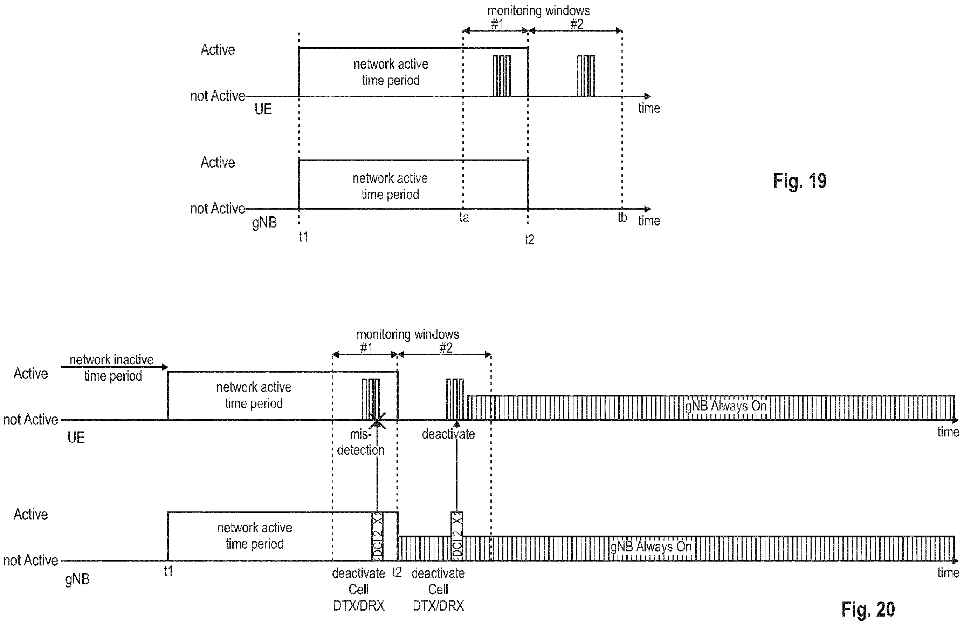

According to the Variant 2, the two DCI monitoring windows are defined with regard to the end point of the network active time period. The first DCI monitoring window is configured to be right at the end of the network active time period, while the second DCI monitoring window is configured to be right after the network active time period. This configuration of the two DCI monitoring windows according to Variant 2 of the first solution is illustrated in an exemplary and simplified manner in **Fig. 19****.**

The two DCI monitoring windows can be defined e.g. based on the following parameters in the cell DTX/DRX configuration. In one option, the first DCI monitoring window is determined to start at time ta which is a first offset time before the end point of said network active time period at time t2. The end point of the first DCI monitoring window would be the end point of said network active time period at time t2.

The starting point of the second DCI monitoring window is the end point of said network active time period at time t2. The end point of the second DCI monitoring window can be determined as well based on a time offset, particularly being at a time tb which is a second offset time after the end point of said network active time period of time t2. Alternatively, the end point of the second DCI monitoring window could be determined based on a duration parameter, which gives the time duration of the first and second DCI monitoring windows together; thus, in combination with the starting time of the first DCI monitoring window, the UE can determine the end point of the second DCI monitoring window.

In the following, an exemplary operation of the UE and gNB for the improved cell DTX/DRX control procedure according to Variant 2 of the first solution will be explained, with reference to **Fig. 20****.** It is assumed that the UE and gNB have a Cell DTX/DRX configuration which is currently active. In Fig. 20, the active Cell DTX/DRX function is exemplarily illustrated with a corresponding network inactive time period and a network active time period.

Eventually, the gNB decides to deactivate the Cell DTX/DRX function, e.g. because the gNB needs to transmit a large amount of downlink data to the UE. Thus, the gNB informs the UE about the inactive Cell DTX/DRX function by transmitting a corresponding DCI format 2_X in one of the monitoring occasions of the first DCI monitoring window.

The UE monitors these monitoring occasions during the first DCI monitoring window, but is still not able to receive the DCI 2_X message (indicated as "mis-detection" in Fig. 20).

This misdetection of the DCI format 2_X message at the UE creates a misalignment of the Cell DTX/DRX function at the UE and gNB. In particular, the gNB already operates according to the inactive Cell DTX/DRX function, and particularly is always on (vertically shaded block labelled "gNB always on"). On the other hand, since the UE was not able to receive the DCI format 2_X in the first DCI monitoring window, the UE considers the gNB to be still operating according to the Cell DTX/DRX function and thus considers the network inactive time period after the end of the network active time period.

Furthermore, the gNB uses the second DCI monitoring window, particularly the MOs configured for the UE therein, to again transmit the DCI format 2_X. For instance, the gNB may always transmit the DCI format 2_X in the second DCI monitoring window as well. Or the gNB might decide to transmit the DCI format 2_X during the second DCI monitoring window, because it failed to receive a (direct or indirect) feedback from the UE that the DCI format 2_X transmission in the first DCI monitoring window was received (not illustrated in Fig. 20).

From UE perspective, since the UE did not receive a DCI format 2_X message during the first DCI monitoring window, the UE proceeds to monitor for the DCI format 2_X during the second DCI monitoring window. Correspondingly, the UE also monitors the MOs during the second DCI monitoring window and at this time is able to receive the DCI format 2_X. As a result, the UE understands that the gNB has deactivated its network-side DTX/DRX function and thus considers the gNB to be always on.

Although not illustrated in Fig. 20, in case the DCI format 2_X indicates activation of an inactive Cell DTX/DRX function during the first DCI monitoring time window, the UE, receiving said DCI format 2_X, understands that the gNB has activated its network-side DTX/DRX function and follows the Cell DTX/DRX configuration. In this case, the UE follows the rest of the network active time period until time t2 and then the further alternating subsequent network inactive time periods and network active time periods.

According to an exemplary implementation of Variant 2 of the first solution, it is assumed that the network active time period is implemented at the UE side by use of a timer (called e.g. the network active timer). As already explained for Variant 1 of the first solution, in case the DCI format 2_X is received in the first DCI monitoring time window, i.e. before the end of said network active time period, the not-yet started network active timer is started by the UE with a reduced timer value such that the network active timer expires with the end of the network active time period at time t2 as initially configured by the Cell DTX/DRX configuration. Optionally, the initially configured time value of the network active timer needs to be reduced by a time offset that amounts to a time from the beginning of the network active time period until the DCI format 2_X is received and processed.

One of the advantages of Variant 2, compared to Variant 1, is that it can be beneficial for the gNB to decide on activation / deactivation of the Cell DTX/DRX function with a lower latency depending on when the traffic arrives.

Furthermore, having the first and second DCI monitoring windows around the end of the network active time period avoids the risk of having overlapping MOs for receiving the new DCI format 2_X and the DCI format 2_6 (for the wake up signal), especially in case the network active time period and the OnDuration period of the UE-side C-DRX function are aligned.

### Variant 3 - after network active time period

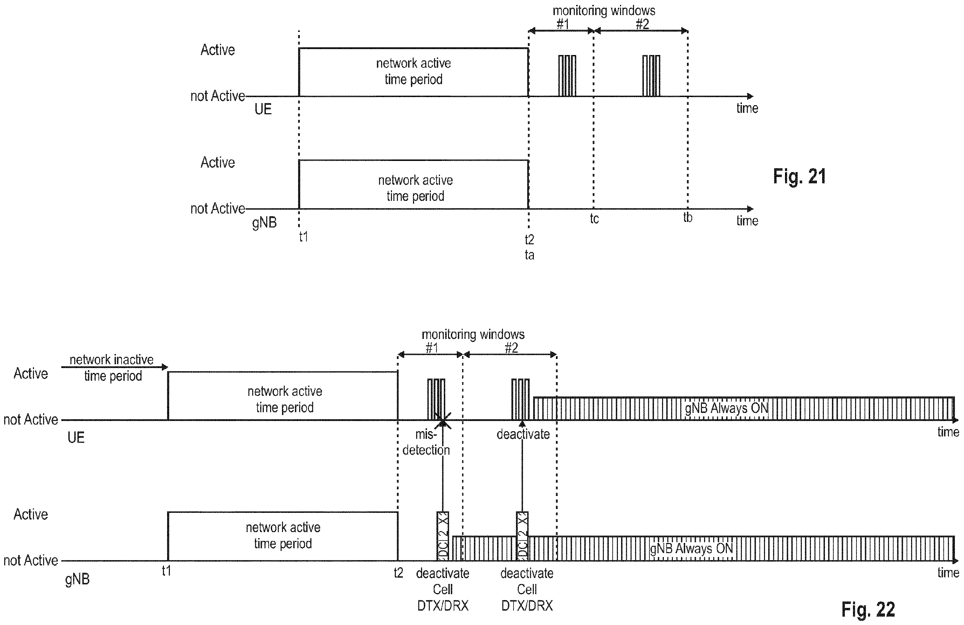

According to the Variant 3, the two DCI monitoring windows are defined with regard to the end point of the network active time period. Both the first and second DCI monitoring windows are configured to be right after the network active time period. This configuration of the two DCI monitoring windows according to Variant 3 of the first solution is illustrated in an exemplary and simplified manner in **Fig. 21****.**

The two DCI monitoring windows can be defined e.g. based on the following parameters in the cell DTX/DRX configuration. In one option, the first DCI monitoring window is determined to start at time ta which is the end point of said network active time period at time t2. The end point of the first DCI monitoring window would be at time tc, which is a first time offset after the end point of said network active time period at time t2.

The starting point of the second DCI monitoring window is the end point of said first DCI monitoring time window at time tc. The end point of the second DCI monitoring window could be determined based on a duration parameter, which gives the time duration of the first and second DCI monitoring windows together; thus, in combination with the starting time of the first DCI monitoring window, the UE can determine the end point of the second DCI monitoring window to be at time tb.

In the following, an exemplary operation of the UE and gNB for the improved cell DTX/DRX control procedure according to Variant 3 of the first solution will be explained, with reference to **Fig. 22****.** It is assumed that the UE and gNB have a Cell DTX/DRX configuration which is currently active. In Fig. 22, the active Cell DTX/DRX function is exemplarily illustrated with a corresponding network inactive time period and a network active time period.

Eventually, the gNB decides to deactivate the Cell DTX/DRX function, e.g. because the gNB needs to transmit a large amount of downlink data to the UE. Thus, the gNB informs the UE about the inactive Cell DTX/DRX function by transmitting a corresponding DCI format 2_X in one of the monitoring occasions of the first DCI monitoring window.

The UE monitors these monitoring occasions during the first DCI monitoring window, but is still not able to receive the DCI 2_X message (indicated as "mis-detection" in Fig. 22).

This misdetection of the DCI format 2_X message at the UE creates a misalignment of the Cell DTX/DRX function at the UE and gNB. In particular, the gNB already operates according to the inactive Cell DTX/DRX function, and particularly is always on (vertically shaded block labelled "gNB always on"). On the other hand, since the UE was not able to receive the DCI format 2_X in the first DCI monitoring window, the UE considers the gNB to be still operating according to the Cell DTX/DRX function and thus maintains the receive and transmit operations according to the current network inactive time period.

Furthermore, the gNB uses the second DCI monitoring window, particularly the MOs configured for the UE therein, to again transmit the DCI format 2_X. For instance, the gNB may always transmit the DCI format 2_X in the second DCI monitoring window as well. Or the gNB might decide to transmit the DCI format 2_X during the second DCI monitoring window, because it failed to receive a (direct or indirect) feedback from the UE that the DCI format 2_X transmission in the first DCI monitoring window was received (not illustrated in Fig. 22).

From UE perspective, since the UE did not receive a DCI format 2_X message during the first DCI monitoring window, the UE proceeds to monitor for the DCI format 2_X during the second DCI monitoring window. Correspondingly, the UE also monitors the MOs during the second DCI monitoring window and at this time is able to receive the DCI format 2_X. As a result, the UE understands that the gNB has deactivated its network-side DTX/DRX function and thus considers the gNB to be always on.

Although not illustrated in Fig. 22, in case the DCI format 2_X indicates activation of an inactive Cell DTX/DRX function during the first or second DCI monitoring time window, the UE, receiving said DCI format 2_X, understands that the gNB has activated its network-side DTX/DRX function and will follow the Cell DTX/DRX configuration from then on.

One of the advantages of Variant 3, compared to e.g. Variant 1, is similar to the advantage of Variant 2. Variant 3 could also provide a compromise between Variants 1 and 2.ln the above, Variants 1-3 have been described on how the first and second DCI monitoring windows are configured with relation to the network active time period. The UE and gNB operate according to one of these Variants 1-3, such that the operation is aligned. Correspondingly, the UE and gNB might be able to only follow one of the Variants 1-3. Alternatively, the UE and gNB might be able to follow more than just one (e.g. any two out of the three Variants or all three Variants) and which Variant is followed by the UE and gNB is configurable, e.g. by the gNB as part of the Cell DTX/DRX configuration.

### Further implementations

In the above, many different variants and implementations of the first solution were described, focusing on the network-side DTX/DRX function.

In further exemplary implementations, the UE and gNB also perform their reception and transmission operations according to a UE-side DRX function, such as the C-DRX already known in the 3GPP standards, such as described in the above section relating to Discontinued Reception, DRX, in LTE and 5G NR. Accordingly, the UE operates its monitoring function not only with respect to the Cell DTX/DRX function but also based on the UE-side DRX function, which in turn defines a pattern of alternating UE-side DCI monitoring time periods and UE-side DCI non-monitoring time periods.

According to one exemplary implementation, the UE coordinates the UE-side DRX function and the network-side DTX/DRX function by determining the UE-side DCI monitoring time period to be valid
- at a time of a network active time period of the network-side DTX/DRX function that is active or
- at any time at which the network-side DTX/DRX function that is not active,

Correspondingly, the processing circuitry operates the monitoring function during the UE-side DCI monitoring time periods that have been determined to be valid.

This allows different configurations of the C-DRX function at the UE-side among different UEs or groups of UEs, which then can be managed commonly by the network-side DTX/DRX function.

Furthermore, to improve coordination with the UE-side C-DRX function, it is also possible to define the network-side Cell DTX function (interacting with the UE-side C-DRX function) separately from the network-side Cell DRX function.

A power saving enhancement for the UE-side C-DRX function is the use of the Wake-Up signal introduced in 5G NR Rel. 16; see above section relating to Power-Saving enhancements - Wake-up signal, WU. The following exemplary implementation of the improved Cell DTX/DRX control procedure takes into account the Wake-Up signal.

In one example, the Wake-Up signal can be the one as currently standardized for 5G NR e.g. in 3GPP TS 38.213, section 10.3.

More generally, however, in another example, a wake-up signal is exemplarily assumed to be carried by a Wake-Up DCI format (such as the DCI format 2_6 defined by 5G NR) and to indicate whether the UE shall wake up or not for the UE-side C-DRX On Duration periods. The UE monitors for said WU DCI format with the Wake-up signal in monitoring occasions before the starting point of the C-DRX On Duration periods.

As presented above, it is thus possible that the UE shall monitor for the WU DCI as well as for the new DCI 2_X relating to the Cell DTX/DRX function, and further that the monitoring occasions for both may be identical or overlapping (see e.g. Fig. 10). In more detail, the above Variant 1 of the first solution is based on having two DCI monitoring windows with regard to the start of the network active time period for monitoring the DCI 2_X, wherein the first DCI monitoring window is configured to be right before the network active time period, while the second DCI monitoring window is configured to be at the start of the network active time period. Therefore, it is possible that the monitoring occasions of the first DCI monitoring window for monitoring the DCI format 2_X and the monitoring occasions for monitoring the WU DCI format are the same or at least partly overlap.

According to one implementation, in such a case in which the UE is configured to monitor for the reception of both DCI format 2_X and WU DCI format in the same or overlapping monitoring occasions, the UE determines to skip monitoring for the DCI format 2_X in the monitoring occasions during the first DCI monitoring window and determines to monitor for reception of the DCI format 2_X in the one or more monitoring occasions during the second DCI monitoring window.

Put differently, even though the UE is initially configured to monitor during two DCI monitoring windows for the DCI format 2_X regarding the Cell DTX/DRX function, an exception is provided for the case of colliding MOs for DCI format 2_X and the WU DCI message. In said case, the UE only monitors for reception of DCI format 2_X during the second DCI monitoring window.

This achieves the advantage that the reliability for receiving the WU DCI format is increased, because these monitoring occasions can be used by the gNB to primarily transmit the WU DCI message (and its repetitions if necessary).

In further exemplary implementations, the improved Cell DTX/DRX control procedure can be controlled to be per carrier, or per multiple carriers or per UE. For instance, the gNB may control whether the Cell DTX/DRX function is to be activated for one carrier, for multiple carriers or for all the carriers that the UE uses.

From the UE perspective, the UE determines whether the first DCI message is applicable to one carrier usable by the UE or to a plurality of carriers usable by the UE or to all carriers usable by the UE. There are at least the following options on how the determination can be performed.

According to one exemplary option, this determination can be based on the Cell DTX/DRX configuration at the UE, which includes suitable information for indicating how to apply the Cell DTX/DRX (de)activation (e.g. for which one or more carriers).

According to another option, this determination can be based on the DCI format 2_X, which may include suitable information for indicating how to apply the Cell DTX/DRX (de)activation (e.g. for which one or more carriers).

According to still another option, this determination can be based on both the Cell DTX/DRX configuration and an indication from the DCI format 2_X. For instance, the Cell DTX/DRX configuration first indicates a plurality of carriers and then the DCI format 2_X selects which of those plurality of carriers.

According to still another option, the DCI format 2_X may indicate a carrier, and the UE determines those carriers that are associated with the indicated carrier. The association can be configured in advance, e.g. by the gNB, e.g. as part of the Cell DTX/DRX configuration.

According to still another option, this determination can be based on the carrier on which the DCI format 2_X message is transmitted, and may determine those one or more carriers associated with the carrier on which the DCI format 2_X message was transmitted. The association can be configured in advance, e.g. by the gNB, e.g. as part of the Cell DTX/DRX configuration.

Following the determination, the UE operates the Cell DTX/DRX function per carrier, including the network active time periods and network inactive time periods either differently per carrier or commonly between several or all carriers.

In implementations in which a network active timer is used for implementing the network active time period, the UE may operate the timer also in a carrier-specific manner, e.g. only for those carrier(s) for which the Cell DTX/DRX function is to be applied.

### Second solution -coordination of DCI formats 2_X and 2_6

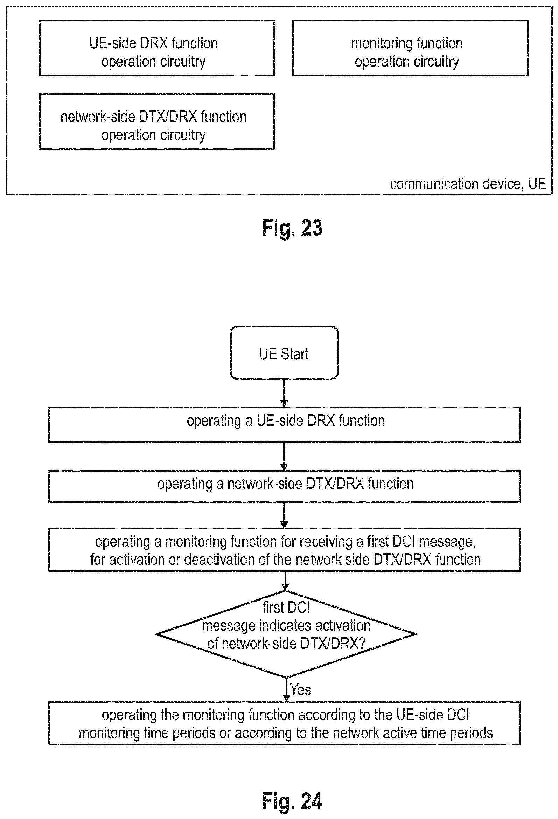

**Fig. 23** illustrates a simplified and exemplary UE structure according to a basic implementation underlying the second solution presented in more detail below. In one example, the UE structure can be implemented based on the general UE structure explained in connection with Fig. 11. The various structural elements of the UE illustrated in said Fig. 23 can be interconnected between one another e.g., with corresponding input/output nodes (not shown) e.g., in order to exchange control and user data and other signals. Although not shown for illustration purposes, the UE may include further structural elements.

As apparent from Fig. 23, the UE may include UE-side DRXfunction operation circuitry, a network-side DTX/DRX function operation circuitry, and a monitoring function operation circuitry.

One exemplary procedure as will be disclosed in more detail further below is implemented by a UE that includes the following. Processing circuitry of the UE operates UE-side discontinuous, DRX, function, including UE-side DCI monitoring time periods and UE-side DCI non-monitoring time periods. The processing circuitry operates a network-side discontinuous transmission and/or reception, DTX/DRX, function, including network active time periods and network inactive time periods. The processing circuitry operates a monitoring function to monitor for reception of a first DCI message during a DCI monitoring time window, wherein the first DCI message is for informing the UE on activation or deactivation of the network-side DTX/DRX function. In case the first DCI message indicates activation of the network-side DTX/DRX function, the processing circuitry performs the monitoring function according to the UE-side DCI monitoring time periods of the UE-side DRX function or according to the network active time periods of the network-side DTX/DRX function.

A corresponding exemplary method comprises the following steps performed by a UE:
operating UE-side discontinuous, DRX, function, including UE-side DCI monitoring time periods and UE-side DCI non-monitoring time periods,
operating a network-side discontinuous transmission and/or reception, DTX/DRX, function, including network active time periods and network inactive time periods,
operating a monitoring function to monitor for reception of a first DCI message during a DCI monitoring time window, wherein the first DCI message is for informing the UE on activation or deactivation of the network-side DTX/DRX function,
in case the first DCI message indicates activation of the network-side DTX/DRX function, performing the monitoring function according to the UE-side DCI monitoring time periods of the UE-side DRX function or according to the network active time periods of the network-side DTX/DRX function.

A corresponding sequence diagram for an exemplary UE behaviour in line with the abovediscussed UE and UE method is presented in **Fig. 24****.**

The above-described improved procedure thus achieves the object and overcomes some of the drawbacks explained above. In particular, the improved Cell DTX/DRX control procedure provides a flexible coordination of which power saving mechanism to follow, i.e. be it the UE-side DRX function and/or the network-side DTX/DRX function.

As explained in the above, the second solution is based on both the UE-side DRX function and the network-side DTX/DRX function. The second solution provides two different variants.

Variant 1 of the second solution is based on that the monitoring function is then performed according to the UE-side DCI monitoring time periods of the UE-side DRX function. The UE-side DCI monitoring time period is started when the DCI 2_X indicates activation of the network-side DTX/DRX function.

As an exemplary implementation of Variant 1 of the second solution, the UE operates a OnDuration timer for the UE-side DCI monitoring time period. The function of the network active timer of the Cell DTX/DRX function is thus overwritten by the OnDuration timer of the UE-side DRX function. Consequently, the UE performs the monitoring function by following the OnDuration timer, and not the network active timer.

According to an exemplary implementation of Variant 1 of the second solution, the Wake-up signal may be used as well as a power saving enhancement, e.g. as introduced in 5G NR Rel. 16; see above section relating to Power-Saving enhancements - Wake-up signal, WUS. More generally, however, in another example, a wake-up signal is exemplarily assumed to be carried by a WakeUp DCI format (such as the DCI format 2_6 defined by 5G NR) and to indicate whether the UE shall wake up or not for the UE-side C-DRX On Duration periods. Consequently, the gNB may further control the OnDuration periods of the UE-side DRX function to be followed by the UE for the monitoring function according to Variant 1 of the second solution.

Variant 2 of the second solution is additionally based on the indication by the wake-up signal, carried by another DCI message to the UE. In particular, a power saving enhancement for the UE-side C-DRX function is the use of the Wake-Up signal introduced in 5G NR Rel. 16; see above section relating to Power-Saving enhancements - Wake-up signal, WUS. The following exemplary implementation of the improved Cell DTX/DRX control procedure takes into account the Wake-Up signal.

In one example, the Wake-Up signal can be the one as currently standardized for 5G NR e.g. in 3GPP TS 38.213, section 10.3. More generally, however, in another example, a wake-up signal is exemplarily assumed to be carried by a Wake-Up DCI format (such as the DCI format 2_6 defined by 5G NR) and to indicate whether the UE shall wake up or not for the UE-side C-DRX On Duration periods. The UE monitors for said WU DCI format with the Wake-up signal in monitoring occasions before the starting point of the C-DRX On Duration periods.

According to Variant 2 of the second solution, in case the DCI format 2_X indicates activation of the network-side DTX/DRX function and also in case the WU DCI message indicates to wake up during the UE-side On-Duration periods, the UE determines to perform the monitoring function according to the network active time periods of the network-side DTX/DRX function.

As an exemplary implementation of Variant 2 of the second solution, the UE operates a network active timer for the network active time period, and the UE starts said network active timer accordingly in case both the DCI format 2_X indicates activation and the WU DCI indicates wakeup.

On the other hand, in case the WU DCI message indicates to not wake up during the UE's On-Duration period, the UE does not wake up to monitor and neither follows the On-Duration period of the UE-side DRX function nor the network active time of the network-side DTX/DRX function.

The network active timer of the Cell DTX/DRX function is controlled by both the WU DCI and the DCI format 2_X.

### Further Aspects

According to a first aspect, a UE is provided that includes the following. Processing circuitry of the UE operates a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function. The processing circuitry monitors for reception of the first DCI message in one or more monitoring occasions during a first DCI monitoring window associated with a network active time period of the network-side DTX/DRX function. The processing circuitry monitors for reception of the first DCI message in one or more monitoring occasions during a second DCI monitoring window associated with said network active time period, said second DCI monitoring window being subsequent to the first DCI monitoring window.

According to a second aspect provided in addition to the first aspect, the processing circuitry determines the first and second DCI monitoring windows with respect to the starting point or end point of said network active time period. Optionally, the determination of the first and second DCI monitoring windows is based on one or more of a first time offset, a second time offset, and a duration. In an optional implementation, at least one him of the first and second DCI monitoring windows is outside said network active time period. Optionally, the remaining DCI monitoring window is inside said network active time period. In an optional implementation the UE comprises a receiver, which receives, from a base station, one or more of the first time offset, the second time offset and the duration as part of a configuration of the network-side DTX/DRX function. Optionally, the configuration of the network-side DTX/DRX function is received as a message of Radio Resource Control, RRC, protocol. In an optional indentation, the configuration of the network-side DTX/DRX function configures said network active time period.

According to a third aspect provided in addition to the first or second aspect, the first DCI monitoring window starts before and ends at the starting point of said network active time period. The second DCI monitoring window starts at the starting point of and ends inside said network active time period. In an optional implementation, the first DCI monitoring window is determined to start at a first offset time before the starting point of said network active time period. Optionally, the second DCI monitoring window is determined to end at a second offset time after the starting point of said network active time period or to end at a duration after the starting point of the first DCI monitoring window.

According to a fourth aspect, provided in addition to the third aspect, in case the first DCI message is received after the starting point but before the end point of said network active time period,
- the processing circuitry performs start of a network active timer for the network active time period of the network-side DTX/DRX function with a timer value such that the network active timer expires with an end point of the network active time period as configured by the network-side DTX/DRX function,
- optionally the processing circuitry reduces a timer value, as configured by the network-side DTX/DRX function for the network active timer, by an amount of time that lasts from the starting point of the network active time period until the time the first DCI message is received, and the processing circuitry starts the network active timer for the network active time period with the reduced timer value.

According to a fifth aspect, provided in addition to any one of the first to fourth aspects, the first DCI monitoring window starts before and ends at the end point of said network active time period. The second DCI monitoring window starts at the end point of said network active time period and ends after said network active time period. In an optional implementation, the first DCI monitoring window is determined to start at a first offset time before the end point of said network active time period. Optionally, the second DCI monitoring window is determined to end at a second offset time after the end point of said network active time period or to end at a duration after the starting point of the first DCI monitoring window.

According to a sixth aspect, provided in addition to any one of the first to fifth aspects, the first DCI monitoring window starts at the end point of said network active time period and ends after the end point of said network active time period. The second DCI monitoring window starts at the end point of the first DCI monitoring window. In an optional implementation, the first DCI monitoring window is determined by the processing circuitry to end at a first offset time after the end point of said network active time period. The second DCI monitoring window is determined by the processing circuitry to end at a duration after the starting point of the first DCI monitoring window.

According to a seventh aspect, provided in addition to any one of the first to sixth aspects, the processing circuitry determines to monitor for reception of the first DCI message during the second DCI monitoring window,
- in case the first DCI message is not received during the first DCI monitoring window, or
- irrespective of whether the first DCI message is received or not during the first DCI monitoring window.

According to an eighth aspect, provided in addition to any one of the first to seventh aspects, the processing circuitry determines whether the network-side DTX/DRX function is active or not active based on the first DCI message. In an optional implementation, in case the first DCI message indicates activation of the network-side DTX/DRX function,
- the processing circuitry controls reception and transmission by the UE according to the active network-side DTX/DRX function,
- optionally the processing circuitry controls reception and transmission by the UE to occur during a network active time period,
- optionally the processing circuitry starts a network active timer for the network active time period of the active network-side DTX/DRX function.

In case the first DCI message indicates deactivation of the network-side DTX/DRX function,
- the processing circuitry operates reception and transmission by the UE according to the inactive network-side DTX/DRX function,
- optionally the processing circuitry controls reception and transmission by the UE to occur irrespective of any network active time period and network inactive time period of the inactive network-side DTX/DRX function.

According to a ninth aspect, provided in addition to any one of the first to eighth aspects, in case the processing circuitry does not receive the first DCI message during the first and second DCI monitoring windows,
- the processing circuitry, in operation, determines to perform one of:
   - assume the network-side DTX/DRX function is active, optionally being pre-defined or RRC-configured,
   - assume the network-side DTX/DRX function is inactive, optionally being pre-defined or RRC-configured,
   - assume whether the network-side DTX/DRX function is active or inactive is based on the first DCI message that most recently received by the UE, and
   - assume whether the network-side DTX/DRX function is active or inactive is based on the first DCI message that was previously received within a validity duration.

According to a tenth aspect, provided in addition to any one of the first to ninth aspects, the processing circuitry determines monitoring occasions during which the UE monitors the downlink control channel for reception of downlink control messages based on a search space configuration. The search space configuration configures monitoring occasions such that at least one monitoring occasion is configured during each of the first and second DCI monitoring occasions. In an optional implementation, a receiver of the UE receives the search space configuration from a base station.

According to an eleventh aspect, provided in addition to any one of the first to tenth aspects, the processing circuitry determines whether the first DCI message is applicable to one carrier usable by the UE or to a plurality of carriers usable by the UE or to all carriers usable by the UE. In an optional implementation, the determination is based on one or a combination of:
- a configuration of the network-side DTX/DRX function, or
- an indication in the first DCI message, or
- one or more carriers associated with a carrier indicated in the first DCI message, or
- one or more carriers associated with a carrier used for transmitting the first DCI message.

According to a twelfth aspect, provided in addition to any one of the first to eleventh aspects, in case the monitoring function is configured to monitor for reception of both the first DCI message and a second DCI message in the same or overlapped one or more monitoring occasions during the first DCI monitoring window, the second DCI message indicating to the UE whether or not to wake up as part of a UE-side discontinuous reception, DRX, function:
- the processing circuitry determines to skip monitoring for the first DCI message in the one or more monitoring occasions during the first DCI monitoring window and determines to monitor for reception of the first DCI message in the one or more monitoring occasions during the second DCI monitoring window.

According to a thirteenth aspect, provided in addition to any one of the first to twelfth aspects, the network-side DTX/DRX function is based on a pattern of alternating network active time periods and network inactive time periods. During a network inactive time period the base station is not expected to transmit one or more of downlink data and downlink control and is not expected to receive one or more of uplink data and uplink control. Optionally, the UE, during a network inactive time period, does not transmit one or more of uplink data and uplink control to the base station and does not monitor for one or more of downlink data and downlink control from the base station. In an optional implementation, during a network active time period the gNB is expected to transmit one or more of downlink data and downlink control and is expected to receive one or more of uplink data and uplink control.

According to a fourteenth aspect, provided in addition to any one of the first to thirteenth aspects, the processing circuitry operates the monitoring function based on a UE-side discontinuous reception, DRX, function. Optionally, the UE-side DRX function is based on a pattern of alternating UE-side DCI monitoring time periods and UE-side DCI non-monitoring time periods. In an optional implementation, the processing circuitry determines the UE-side DCI monitoring time period to be valid at a time of a network active time period of the network-side DTX/DRX function that is active or at any time at which the network-side DTX/DRX function that is not active. Optionally, the processing circuitry operates the monitoring function during the UE-side DCI monitoring time periods that have been determined to be valid.

According to a fifteenth aspect, a base station is provided comprising the following. A processing circuitry, which configures a monitoring function performed at a user equipment, UE, wherein the monitoring function involves monitoring for reception of a first downlink control information, DCI, message on a downlink control channel. The first DCI message is for informing the UE on activation or deactivation of a network-side discontinuous transmission and/or reception, DTX/DRX, function. The monitoring function involves monitoring for reception of the first DCI message in one or more monitoring occasions during a first DCI monitoring window associated with a network active time period of the network-side DTX/DRX function. The monitoring function involves monitoring for reception of the first DCI message in one or more monitoring occasions during a second DCI monitoring window associated with said network active time period, said second DCI monitoring window being subsequent to the first DCI monitoring window.

According to a sixteenth aspect, provided in addition to the fifteenth aspect, the processing circuitry configures the first and second DCI monitoring windows with respect to the starting point or end point of said network active time period, optionally wherein at least one of the first and second DCI monitoring windows is outside said network active time period. The 3 following options possible.
- the first DCI monitoring window starts before and ends at the starting point of said network active time period, and the second DCI monitoring window starts at the starting point of and ends inside said network active time period, or
- the first DCI monitoring window starts before and ends at the end point of said network active time period, and the second DCI monitoring window starts at the end point of said network active time period and ends after said network active time period, or
- the first DCI monitoring window starts at the end point of said network active time period and ends after the end point of said network active time period, and the second DCI monitoring window starts at the end point of the first DCI monitoring window.

According to a seventeenth aspect, provided in addition to the fifteenth or sixteenth aspect, a transmitter of the base station transmits to the UE one or more of a first time offset, a second time offset and a duration as part of a configuration of the network-side DTX/DRX function, such that the UE is able to determine the first and second DCI monitoring windows with respect to the starting point or end point of said network active time period based on one or more of the first time offset, the second time offset, and the duration. In an optional implementation , the processing circuitry determines the first and second DCI monitoring windows with respect to the starting point or end point of said network active time period based on one or more of the first time offset, the second time offset, and the duration.

According to an eighteenth aspect, provided in addition to any one of the fifteenth to sixteenth aspects, a transmitter of the base station transmits the first DCI message to the UE during one or both of the first DCI monitoring window and the second DCI monitoring window. In an optional implementation, the processing circuitry determines to transmit the first DCI message during the second DCI monitoring window,
- in case the base station does not receive a feedback from the UE that the first DCI message was received during the first DCI monitoring window, or
- irrespective of any feedback from the UE that the first DCI message was received during the first DCI monitoring window.

According to a nineteenth aspect, provided in addition to any one of the fifteenth to eighteenth aspects, the processing circuitry determines when to activate or deactivate the network-side DTX/DRX function and determines in case it is determined to activate or deactivate the network-side DTX/DRX function. The processing circuitry determines to inform the UE about activation or deactivation of the network-side DTX/DRX function. In an optional implementation, the processing circuitry operates a network active timer for the network active time period of the network-side DTX/DRX function.

According to a 20^{th} aspect, provided in addition to any one of the fifteenth to nineteenth aspect, in case the monitoring function is configured such that the UE monitors for reception of both the first DCI message and a second DCI message in the same or overlapping one or more monitoring occasions during the first DCI monitoring window, the second DCI message indicating to the UE whether or not to wake up as part of a UE-side discontinuous reception, DRX, function:
- the processing circuitry determines to skip transmission of the first DCI message in the one or more monitoring occasions during the first DCI monitoring window and determines to transmit the first DCI message in the one or more monitoring occasions during the second DCI monitoring window.

According to a 21^{st} aspect, provided in addition to any one of the fifteenth to 20^{th} aspects, the processing circuitry determines whether the first DCI message is applicable to one carrier usable by the UE or to a plurality of carriers usable by the UE or to all carriers usable by the UE.

According to a 22^{nd} aspect, a method is provided comprising the following steps performed by a user equipment, UE.
operating a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function,
monitoring for reception of the first DCI message in one or more monitoring occasions during a first DCI monitoring window associated with a network active time period of the network-side DTX/DRX function,
monitoring for reception of the first DCI message in one or more monitoring occasions during a second DCI monitoring window associated with said network active time period, said second DCI monitoring window being subsequent to the first DCI monitoring window.

According to a 23^{rd} aspect, a method is provided comprising the following steps performed by a base station.
configuring a monitoring function performed at a user equipment, UE, wherein the monitoring function involves monitoring for reception of a first downlink control information, DCI, message on a downlink control channel, wherein the first DCI message is for informing the UE on activation or deactivation of a network-side discontinuous transmission and/or reception, DTX/DRX, function,
wherein the monitoring function involves monitoring for reception of the first DCI message in one or more monitoring occasions during a first DCI monitoring window associated with a network active time period of the network-side DTX/DRX function, and
wherein the monitoring function involves monitoring for reception of the first DCI message in one or more monitoring occasions during a second DCI monitoring window associated with said network active time period, said second DCI monitoring window being subsequent to the first DCI monitoring window.

According to a 24^{th} aspect, an integrated circuit is provided, which, in operation, controls a process of a user equipment, UE, the process comprising the following steps performed by the UE:
operating a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function,
monitoring for reception of the first DCI message in one or more monitoring occasions during a first DCI monitoring window associated with a network active time period of the network-side DTX/DRX function,
monitoring for reception of the first DCI message in one or more monitoring occasions during a second DCI monitoring window associated with said network active time period, said second DCI monitoring window being subsequent to the first DCI monitoring window.

According to a 25^{th} aspect, an integrated circuit is provided, which, in operation, controls a process of a base station, the process comprising the following steps performed by the base station:
configuring a monitoring function performed at a user equipment, UE, wherein the monitoring function involves monitoring for reception of a first downlink control information, DCI, message on a downlink control channel, wherein the first DCI message is for informing the UE on activation or deactivation of a network-side discontinuous transmission and/or reception, DTX/DRX, function,
wherein the monitoring function involves monitoring for reception of the first DCI message in one or more monitoring occasions during a first DCI monitoring window associated with a network active time period of the network-side DTX/DRX function, and
wherein the monitoring function involves monitoring for reception of the first DCI message in one or more monitoring occasions during a second DCI monitoring window associated with said network active time period, said second DCI monitoring window being subsequent to the first DCI monitoring window.

According to a 26^{th} aspect, a user equipment, UE, is provided comprising the following. Processing circuitry of the UE operates UE-side discontinuous, DRX, function, including UE-side DCI monitoring time periods and UE-side DCI non-monitoring time periods. The processing circuitry operates a network-side discontinuous transmission and/or reception, DTX/DRX, function, including network active time periods and network inactive time periods. The processing circuitry operates a monitoring function to monitor for reception of a first DCI message during a DCI monitoring time window, wherein the first DCI message is for informing the UE on activation or deactivation of the network-side DTX/DRX function. In case the first DCI message indicates activation of the network-side DTX/DRX function, the processing circuitry performs the monitoring function according to the UE-side DCI monitoring time periods of the UE-side DRX function or according to the network active time periods of the network-side DTX/DRX function.

According to a 27^{th} aspect, provided in addition to the 26^{th} aspect, in case the first DCI message indicates activation of the network-side DTX/DRX function, the processing circuitry performs the monitoring function according to the UE-side DCI monitoring time periods of the UE-side DRX function. In an optional implementation, the processing circuitry starts a UE-side DCI monitoring timer for the UE-side DCI monitoring time period.

According to an 28^{th} aspect, provided in addition to the 26^{th} aspect, the processing circuitry operates the monitoring function to monitor for reception of a second DCI message. The second DCI message indicates to the UE whether or not to wake up during the UE-side DCI monitoring time period of the UE-side DRX, DRX, function. In case the first DCI message indicates activation of the network-side DTX/DRX function and the second DCI message indicates to wake up during the UE-side DCI monitoring time period, the processing circuitry performs the monitoring function according to the network active time periods of the network-side DTX/DRX function. In an optional implementation, the processing circuitry starts a network active timer for the network active time period. In a further optional implementation, in case the second DCI message indicates to not wake up during the UE-side DCI monitoring time period, the processing circuitry performs the monitoring function to not monitor.

According to a 29^{th} aspect, a method is provided comprising the following steps performed by a user equipment, UE.
operating UE-side discontinuous, DRX, function, including UE-side DCI monitoring time periods and UE-side DCI non-monitoring time periods,
operating a network-side discontinuous transmission and/or reception, DTX/DRX, function, including network active time periods and network inactive time periods,
operating a monitoring function to monitor for reception of a first DCI message during a DCI monitoring time window, wherein the first DCI message is for informing the UE on activation or deactivation of the network-side DTX/DRX function,
in case the first DCI message indicates activation of the network-side DTX/DRX function, performing the monitoring function according to the UE-side DCI monitoring time periods of the UE-side DRX function or according to the network active time periods of the network-side DTX/DRX function.

According to a 30^{th} aspect, an integrated circuit is provided, which controls a process of a user equipment, UE; the process comprising the following steps performed by the UE.
operating UE-side discontinuous, DRX, function, including UE-side DCI monitoring time periods and UE-side DCI non-monitoring time periods,
operating a network-side discontinuous transmission and/or reception, DTX/DRX, function, including network active time periods and network inactive time periods,
operating a monitoring function to monitor for reception of a first DCI message during a DCI monitoring time window, wherein the first DCI message is for informing the UE on activation or deactivation of the network-side DTX/DRX function,
in case the first DCI message indicates activation of the network-side DTX/DRX function, performing the monitoring function according to the UE-side DCI monitoring time periods of the UE-side DRX function or according to the network active time periods of the network-side DTX/DRX function.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
processing circuitry, which in operation, operates a monitoring function that involves monitoring for reception of a first downlink control information, DCI, message on a downlink control channel, wherein the first DCI message is for informing the UE on activation or deactivation of a network-side discontinuous transmission and/or reception, DTX/DRX, function,
wherein the processing circuitry, in operation, monitors for reception of the first DCI message in one or more monitoring occasions during a first DCI monitoring window associated with a network active time period of the network-side DTX/DRX function,
wherein the processing circuitry, in operation, monitors for reception of the first DCI message in one or more monitoring occasions during a second DCI monitoring window associated with said network active time period, said second DCI monitoring window being subsequent to the first DCI monitoring window.

2. The UE according to claim 1, wherein the processing circuitry, in operation, determines the first and second DCI monitoring windows with respect to the starting point or end point of said network active time period, optionally wherein the determination of the first and second DCI monitoring windows is based on one or more of a first time offset, a second time offset, and a duration,
optionally wherein at least one of the first and second DCI monitoring windows is outside said network active time period, optionally wherein the remaining DCI monitoring window is inside said network active time period,
optionally wherein the UE comprises a receiver, which in operation, receives, from a base station, one or more of the first time offset, the second time offset and the duration as part of a configuration of the network-side DTX/DRX function, optionally wherein the configuration of the network-side DTX/DRX function is received as a message of Radio Resource Control, RRC, protocol, and
optionally wherein the configuration of the network-side DTX/DRX function configures said network active time period.

3. The UE according to any one of claims 1 to 2, wherein the first DCI monitoring window starts before and ends at the starting point of said network active time period, and the second DCI monitoring window starts at the starting point of and ends inside said network active time period, and
optionally wherein the first DCI monitoring window is determined to start at a first offset time before the starting point of said network active time period, and optionally wherein the second DCI monitoring window is determined to end at a second offset time after the starting point of said network active time period or to end at a duration after the starting point of the first DCI monitoring window.

4. The UE according to claim 3, wherein in case the first DCI message is received after the starting point but before the end point of said network active time period,
• the processing circuitry performs start of a network active timer for the network active time period of the network-side DTX/DRX function with a timer value such that the network active timer expires with an end point of the network active time period as configured by the network-side DTX/DRX function,
• optionally the processing circuitry reduces a timer value, as configured by the network-side DTX/DRX function for the network active timer, by an amount of time that lasts from the starting point of the network active time period until the time the first DCI message is received, and the processing circuitry starts the network active timer for the network active time period with the reduced timer value.

5. The UE according to any one of claims 1 to 4, wherein the first DCI monitoring window starts before and ends at the end point of said network active time period, and the second DCI monitoring window starts at the end point of said network active time period and ends after said network active time period,
optionally wherein the first DCI monitoring window is determined to start at a first offset time before the end point of said network active time period, and optionally wherein the second DCI monitoring window is determined to end at a second offset time after the end point of said network active time period or to end at a duration after the starting point of the first DCI monitoring window.

6. The UE according to any one of claims 1 to 5, wherein the first DCI monitoring window starts at the end point of said network active time period and ends after the end point of said network active time period, and the second DCI monitoring window starts at the end point of the first DCI monitoring window,
optionally wherein the first DCI monitoring window is determined by the processing circuitry to end at a first offset time after the end point of said network active time period, and the second DCI monitoring window is determined by the processing circuitry to end at a duration after the starting point of the first DCI monitoring window.

7. The UE according to any one of claims 1 to 6, wherein the processing circuitry, in operation, determines to monitor for reception of the first DCI message during the second DCI monitoring window,
• in case the first DCI message is not received during the first DCI monitoring window, or
• irrespective of whether the first DCI message is received or not during the first DCI monitoring window.

8. The UE according to any one of claims 1 to 7, wherein the processing circuitry, in operation, determines whether the network-side DTX/DRX function is active or not active based on the first DCI message,
optionally wherein in case the first DCI message indicates activation of the network-side DTX/DRX function,
• the processing circuitry controls reception and transmission by the UE according to the active network-side DTX/DRX function,
• optionally the processing circuitry controls reception and transmission by the UE to occur during a network active time period,
• optionally the processing circuitry starts a network active timer for the network active time period of the active network-side DTX/DRX function,
in case the first DCI message indicates deactivation of the network-side DTX/DRX function,
• the processing circuitry operates reception and transmission by the UE according to the inactive network-side DTX/DRX function,
• optionally the processing circuitry controls reception and transmission by the UE to occur irrespective of any network active time period and network inactive time period of the inactive network-side DTX/DRX function.

9. The UE according to any one of claims 1 to 8, wherein in case the processing circuitry, in operation, does not receive the first DCI message during the first and second DCI monitoring windows,
• the processing circuitry, in operation, determines to perform one of:
∘ assume the network-side DTX/DRX function is active, optionally being pre-defined or RRC-configured,
∘ assume the network-side DTX/DRX function is inactive, optionally being pre-defined or RRC-configured,
∘ assume whether the network-side DTX/DRX function is active or inactive is based on the first DCI message that most recently received by the UE, and
∘ assume whether the network-side DTX/DRX function is active or inactive is based on the first DCI message that was previously received within a validity duration.

10. The UE according to any one of claims 1 to 9, wherein the processing circuitry, in operation, determines whether the first DCI message is applicable to one carrier usable by the UE or to a plurality of carriers usable by the UE or to all carriers usable by the UE,
optionally wherein the determination is based on one or a combination of:
• a configuration of the network-side DTX/DRX function, or
• an indication in the first DCI message, or
• one or more carriers associated with a carrier indicated in the first DCI message, or
• one or more carriers associated with a carrier used for transmitting the first DCI message.

11. The UE according to any one of claims 1 to 10, wherein in case the monitoring function is configured to monitor for reception of both the first DCI message and a second DCI message in the same or overlapped one or more monitoring occasions during the first DCI monitoring window, the second DCI message indicating to the UE whether or not to wake up as part of a UE-side discontinuous reception, DRX, function:
• the processing circuitry, in operation, determines to skip monitoring for the first DCI message in the one or more monitoring occasions during the first DCI monitoring window and determines to monitor for reception of the first DCI message in the one or more monitoring occasions during the second DCI monitoring window.

12. A base station comprising:
a processing circuitry, which in operation, configures a monitoring function performed at a user equipment, UE, wherein the monitoring function involves monitoring for reception of a first downlink control information, DCI, message on a downlink control channel, wherein the first DCI message is for informing the UE on activation or deactivation of a network-side discontinuous transmission and/or reception, DTX/DRX, function,
wherein the monitoring function involves monitoring for reception of the first DCI message in one or more monitoring occasions during a first DCI monitoring window associated with a network active time period of the network-side DTX/DRX function, and
wherein the monitoring function involves monitoring for reception of the first DCI message in one or more monitoring occasions during a second DCI monitoring window associated with said network active time period, said second DCI monitoring window being subsequent to the first DCI monitoring window.

13. A user equipment, UE, comprising:
processing circuitry, which in operation, operates UE-side discontinuous, DRX, function, including UE-side DCI monitoring time periods and UE-side DCI non-monitoring time periods,
the processing circuitry, which in operation, operates a network-side discontinuous transmission and/or reception, DTX/DRX, function, including network active time periods and network inactive time periods,
the processing circuitry, which in operation, operates a monitoring function to monitor for reception of a first DCI message during a DCI monitoring time window, wherein the first DCI message is for informing the UE on activation or deactivation of the network-side DTX/DRX function,
in case the first DCI message indicates activation of the network-side DTX/DRX function, the processing circuitry performs the monitoring function according to the UE-side DCI monitoring time periods of the UE-side DRX function or according to the network active time periods of the network-side DTX/DRX function.

14. The UE according to claim 13, wherein in case the first DCI message indicates activation of the network-side DTX/DRX function, the processing circuitry performs the monitoring function according to the UE-side DCI monitoring time periods of the UE-side DRX function,
optionally wherein the processing circuitry, in operation, starts a UE-side DCI monitoring timer for the UE-side DCI monitoring time period.

15. The UE according to claim 13, wherein the processing circuitry, in operation, operates the monitoring function to monitor for reception of a second DCI message, wherein the second DCI message indicates to the UE whether or not to wake up during the UE-side DCI monitoring time period of the UE-side DRX, DRX, function,
wherein in case the first DCI message indicates activation of the network-side DTX/DRX function and the second DCI message indicates to wake up during the UE-side DCI monitoring time period, the processing circuitry performs the monitoring function according to the network active time periods of the network-side DTX/DRX function,
optionally wherein the processing circuitry, in operation, starts a network active timer for the network active time period,
optionally wherein in case the second DCI message indicates to not wake up during the UE-side DCI monitoring time period, the processing circuitry performs the monitoring function to not monitor.
